(19) Europäisches Patentamt
European Patent Office
Office européen des brevets

(11) **EP 3 696 524 A1**

(12) **EUROPÄISCHE PATENTANMELDUNG**

(43) Veröffentlichungstag:
**19.08.2020 Patentblatt 2020/34**

(21) Anmeldenummer: **20163303.9**

(22) Anmeldetag: **18.12.2015**

(51) Int Cl.:
*G01K 13/00* (2006.01)         *G01K 11/32* (2006.01)
*C08L 33/14* (2006.01)         *C08L 33/24* (2006.01)
*C08L 33/26* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA MD**

(30) Priorität: **07.01.2015 DE 102015100097**

(62) Dokumentnummer(n) der früheren Anmeldung(en) nach Art. 76 EPÜ:
**15201195.3 / 3 043 161**

(71) Anmelder:
• **Bundesrepublik Deutschland, vertreten durch den**
**Bundesminister für Wirtschaft und Energie**
**12205 Berlin (DE)**

• **Fraunhofer Gesellschaft zur Förderung der angewandten Forschung e.V.**
**80686 München (DE)**

(72) Erfinder:
• **SCHUKAR, Markus**
**12681 Berlin (DE)**
• **WISCHERHOFF, Dr., Erik**
**14476 Potsdam-Golm (DE)**

(74) Vertreter: **Zimmermann & Partner**
**Patentanwälte mbB**
**Postfach 330 920**
**80069 München (DE)**

Bemerkungen:
Diese Anmeldung ist am 16-03-2020 als Teilanmeldung zu der unter INID-Code 62 erwähnten Anmeldung eingereicht worden.

(54) **POLYMERMISCHUNG MIT LINEAR VERLAUFENDER SPEZIFISCHER KRITISCHER MISCHUNGSTEMPERATUR UND FASEROPTISCHER TEMPERATURSENSOR BASIEREND AUF THERMORESPONSIVEN POLYMEREN**

(57) Polymermischung zur faseroptischen Temperaturmessung in einem Temperaturbereich von 5 bis 95°C, umfassend ein erstes thermoresponsives Polymer, zumindest ein zweites thermoresponsives Polymer, und ein Lösungs- und/oder Quellmittel, wobei das erste und das zumindest zweite thermoresponsive Polymer wasserlöslich ist und Wasserstoffbrückenakzeptoren, aber keine Wasserstoffbrückendonoren aufweist, wobei das erste thermoresponsive Polymer und das zumindest zweite thermoresponsive Polymer unterschiedliche untere kritische Mischungstemperaturen oder unterschiedliche obere kritische Mischungstemperaturen aufweisen, und die Polymermischung angepasst ist, sodass sie bei einer Temperatur T oberhalb einer Anfangstemperatur $T_A$ = 5 °C und unterhalb einer Endtemperatur $T_E$ = 95 °C einen monotonen Verlauf einer optischen Transparenz in Abhängigkeit von der Temperatur T aufweist, sodass eine Messung der optischen Transparenz der Polymermischung eine optische Bestimmung der Temperatur T erlaubt, wobei $T_E$ > T > $T_A$.

Verwendung der beschriebenen Polymermischung in einem faseroptischen Messsystem (100, 200, 300) zur Messung einer Temperatur, umfassend ein temperatursensitives Element (101, 201, 301), umfassend die Polymermischung; mindestens eine lichtleitende optische Faser (102, 103, 202, 205, 206, 208, 302, 305, 306, 308, 310); eine Lichtquelle (104, 203, 303); und mindestens einen optischen Detektor (105, 207, 209, 309); wobei das temperatursensitive Element mit mindestens einer lichtleitenden optischen Faser (102, 103) verbunden ist, sodass Licht der Lichtquelle zum temperatursensitiven Element und von dort zum optischen Detektor geführt werden kann, sodass eine durch die Polymermischung veränderbare Transparenz des temperatursensitiven Elements vom optischen Detektor detektierbar ist und einer Temperatur am temperatursensitiven Element zuordenbar ist.

Faseroptisches Messsystem (100, 200, 300) zur Messung einer Temperatur, umfassend ein temperatursensitives Element (101, 201, 301); mindestens eine lichtleitende optische Faser (102, 103, 202, 205, 206, 208, 302, 305, 306, 308, 310); eine Lichtquelle (104, 203, 303); und mindestens einen optischen Detektor (105, 207, 209, 309), wobei das temperatursensitive Element die beschriebene Polymermischung umfasst.

FIG. 5

**Beschreibung**

Die Erfindung liegt auf dem Gebiet der Temperaturmessung im Bereich der Medizintechnik, der Prozessmesstechnik und verwandter Gebiete. Sie betrifft insbesondere die permanente Temperaturerfassung an einer diskreten Messstelle und die Übertragung erfasster Messwerte unter extremen äußeren Messbedingungen, unter anderem bei starken elektromagnetischen Feldern. Die Erfindung betrifft Hersteller und Nutzer faseroptischer Messsysteme für die bzw. in den genannten Einsatzgebiete/n.

Eine zuverlässige Temperaturmessung und die Übertragung erhobener Daten in Echtzeit zu einer Leitstelle ist für viele Anwendungen von Bedeutung. Insbesondere gewinnt die Erfassung und permanente Überwachung der Körpertemperatur als wichtigem Vitalparameter bei Personen, die Arbeiten unter extremen Bedingungen durchführen oder dabei besonderen Risiken ausgesetzt sind (Feuerwehrleute, Personal in Kernkraftwerken, Bergwerken etc.) an Interesse. In vielen Fällen ist der Einsatz konventioneller elektrischer Temperatursensoren aufgrund bestimmter Umgebungsbedingungen, wie z.B. der Präsenz elektromagnetischer Felder, erschwert oder völlig unmöglich.

Vor diesem Hintergrund wird eine Polymermischung nach Anspruch 1, deren Verwendung nach Anspruch 9, ein Temperaturmessverfahren nach Anspruch 26 und ein faseroptisches Messsystem nach Anspruch 29 vorgeschlagen. Weitere Ausführungsformen, Modifikationen und Verbesserungen ergeben sich anhand der folgenden Beschreibung und der beigefügten Ansprüche.

Gemäß einer ersten Ausführungsform wird eine Polymermischung vorgeschlagen, die ein erstes thermoresponsives Polymer, zumindest ein zweites thermoresponsives Polymer und ein Lösungs- und/oder Quellmittel umfasst. Diese Polymermischung ist hinsichtlich der Art und der Konzentration der miteinander gemischten Komponenten angepasst, um bei einer Temperatur $T$ oberhalb einer Anfangstemperatur $T_A$ von 5 °C und unterhalb einer Endtemperatur $T_E$ von 95 °C einen monotonen Verlauf einer optischen Transparenz in Abhängigkeit von der Temperatur $T$ aufzuweisen. Der monotone Verlauf der optischen Transparenz der Polymermischung erlaubt es, die Temperatur $T$ der Polymermischung oder einer mit ihr in unmittelbarem Kontakt stehenden Oberfläche optisch zu bestimmen, wobei $T_E > T > T_A$ ist.

In Übereinstimmung mit fachüblicher Terminologie (IUPAC. Compendium of Chemical Terminology, 2nd ed. (the "Gold Book"). Compiled by A. D. McNaught and A. Wilkinson. Blackwell Scientific Publications, Oxford (1997). XML on-line corrected version: http://goldbook.iupac.org (2006-) created by M. Nic, J. Jirat, B. Kosata; updates compiled by A. Jenkins. ISBN 0-9678550-9-8) wird dabei unter einem "Lösungs- und/oder Quellmittel" eine Flüssigkeit verstanden, in der das thermoresponsive Polymer löslich oder zumindest quellfähig ist. Insbesondere wird unter einem Lösungsmittel die Hauptkomponente einer Lösung, d.h. einer molekularen Dispersion, verstanden. Unter einem Quellmittel wird eine Flüssigkeit verstanden, die verwendet wird, ein Gel, ein Netzwerk oder einen Feststoff zum Anschwellen zu bringen. Polymere können in einer Flüssigkeit gelöst als diskrete Polymerknäuel oder als fein dispergierte Aggregate vorliegen. Letztere stellen Streuzentren für in die Lösung oder das Gel einfallendes Licht dar. Die temperaturabhängige Änderung des Streulichtsignals bildet die Grundlage der hier vorgeschlagenen optischen Temperaturmessung unter Verwendung eines temperaturresponsiven Polymeren. Ebenso in Übereinstimmung mit dem fachüblichen Verständnis wird unter einer unteren kritischen Mischungstemperatur diejenige Temperatur verstanden, unterhalb welcher ein betreffendes Polymer mit einem Lösungsmittel mischbar oder im Falle einer vernetzten Verbindung gequollen ist. Unter einer oberen kritischen Mischungstemperatur wird hingegen diejenige Temperatur verstanden, oberhalb welcher ein betreffendes Polymer mit einem Lösungsmittel mischbar ist oder - im Falle eines quervernetzten Moleküls - gequollen vorliegt.

Vorteile dieser Ausführungsform ergeben sich daraus, dass über einen weiten Bereich des elektromagnetischen Spektrums, beispielsweise von 200 nm bis 2000 nm, bevorzugt im Bereich von 220 bis 1800 nm, besonders bevorzugt im Wellenlängenbereich von 380 nm bis 1675 nm, die gemessene Streuung der molekular dispergierten Polymere - d.h. ein an der beschriebenen Polymermischung ermittelter Streulichtwert - eine ausgeprägte Temperaturabhängigkeit zeigt, sodass aus ermittelten Streulichtwerten bzw. bei einer Trübungsmessung eine Bestimmung der Temperatur vorgenommen werden kann. Wenn zumindest ein gelöster bzw. gequollener Zustand besteht, kann ein Phasenübergang aus dem gelösten in den ungelösten Zustand bzw. aus dem gequollenen Zustand in einen Zustand eines zumindest teilweise kollabierten Netzwerks zu einer Änderung der Transmission von Licht führen.

Dabei ist es besonders von Vorteil, dass die in der optischen Signalübertragung etablierten Wellenlängenbereiche, nämlich das O-Band von 1260-1360 nm, das E-Band von 1360-1460 nm, das S-Band von 1460-1530 nm, das C-Band von 1530-1565 nm, das L-Band von 1565-1625 nm, sowie das U-Band von 1625-1675 nm für die optische Temperaturmessung mit thermoresponsiven Polymeren in der beschriebenen Form eignen, wenn an diese Wellenlängenbereiche angepasste Glasfasern verwendet werden. Im C-Band weisen die typischerweise verwendeten Glasfasern eine besonders geringe Dämpfung optischer Signale auf. Vor diesem Hintergrund ist das C-Band besonders prädestiniert für eine Temperaturmessung über große räumliche Distanzen mit Hilfe thermoresponsiver Polymere und deren Mischungen in Kombination mit der für diesen Wellenlängenbereich etablierten und kostengünstig kommerziell verfügbaren Messtechnik.

Für den Fall der Verwendung von optischen Polymerfasern zum Aufbau des beschriebenen faseroptischen Temperatursensors schränkt sich der Wellenlängenbereich auf Grund der typischerweise in Polymerfasern beobachteten Dämpfungen ein auf den Bereich von 400 nm bis 800 nm. Die Wellenlänge des zur Messung verwendeten Lichts liegt bei der Verwendung von Polymerfasern bevorzugt im Bereich von 480 nm bis 680 nm, besonders bevorzugt im Wellenlängenbereich von 630 nm bis 660 nm. Dabei liegt eine zahlenmittlere Molmasse ($M_n$) des thermoresponsiven Polymers im Bereich von 2 000 bis 500 000 g/mol, bevorzugt im Bereich 5 000 bis 250 000 g/mol, besonders bevorzugt im Bereich 10 000 bis 100 000 g/mol.

Dabei liegt eine zahlenmittlere Molmasse ($M_n$) des thermoresponsiven Polymers im Bereich von 2 000 bis 500 000 g/mol, bevorzugt im Bereich 5 000 bis 250 000 g/mol, besonders bevorzugt im Bereich 10 000 bis 100 000 g/mol.

Gemäß einer weiteren Ausführungsform weist das erste thermoresponsive Polymer eine spezifische kritische Mischungstemperatur, insbesondere eine untere kritische Mischungstemperatur oder eine obere kritische Mischungstemperatur auf.

Vorteile dieser Ausführungsform bestehen darin, dass der definierte Wert der unteren bzw. der oberen kritischen Mischungstemperatur eine definierte Veränderung eines Streulichtwertes bewirkt, sodass mit einer kalibrierten Messanordnung eine Temperatur der Stoffzusammensetzung optisch bestimmt werden kann.

Typischerweise weisen das erste thermoresponsive Polymer und das zumindest zweite thermoresponsive Polymer unterschiedliche untere kritische Mischungstemperaturen oder unterschiedliche obere kritische Mischungstemperaturen auf. Die Polymermischung kann auch weitere im Lösungs- / Quellmittel lösliche Bestandteile, z. B. niedermolekulare Salze, enthalten. Dabei werden unter niedermolekularen Salzen Salze mit einer Molmasse unterhalb von 2000 g/mol verstanden.

Vorteile ergeben sich daraus, dass der Bereich messbarer Temperaturen vergrößert wird, wenn zwei thermoresponsive Polymere in der Polymermischung mit unterschiedlichen unteren kritischen Mischungstemperaturen oder mit unterschiedlichen oberen kritischen Mischungstemperaturen vorliegen. Die Erweiterung des Messbereichs kann mit einer lediglich geringfügigen Einbuße bei der Präzision einhergehen.

Gemäß einer weiteren Ausführungsform reicht der monotone Verlauf der optischen Transparenz über einen Temperaturbereich von der Anfangstemperatur $T_A$ bis zur Endtemperatur $T_E$, wobei $T_E - T_A \geq 3$ K, insbesondere $T_E - T_A \geq 5$ K.

Vorteile dieser Ausführungsform ergeben sich daraus, dass für zahlreiche praxisrelevante Anwendungen, beispielsweise in der Medizin, gerade die exakte Überwachung eines engen Temperaturbereiches bedeutsam ist.

Gemäß einer weiteren Ausführungsform liegt der monotone Verlauf im Temperaturbereich von 35 °C bis 40 °C, erstreckt sich beispielsweise von 36,5 °C bis 40 °C.

Vorteile dieser Ausführungsform erschließen sich mit der Prozesskontrolle wasserbasierter Systeme. Derartige Systeme entsprechen beispielhaften industriellen Anwendungen in der pharmazeutischen Industrie und der Lebensmitteltechnologie. Der vergleichsweise enge Temperaturbereich von 36,5°C bis 40°C ist besonders im Bereich der Humanmedizin und der Biotechnologie von praktischer Bedeutung. Für Anwendungen des Temperatursensors unmittelbar am bzw. im Körper eines Menschen, der einer extremen Belastung ausgesetzt ist, wie beispielsweise ein Feuerwehrmann oder Rettungspersonal im Katastrophenschutz, ist für die objektive Bewertung der Urteilsfähigkeit und physischen Leistungsfähigkeit des betreffenden Personals während eines Einsatzes gerade dieser Temperaturbereich aussagefähig. Wird als Bewertungskriterium die Hautoberflächentemperatur herangezogen, so liegt - in Abhängigkeit von der jeweiligen konkreten Messstelle - die entsprechende Temperaturspanne niedriger.

Gemäß einer weiteren Ausführungsform weisen benachbarte obere kritische Mischungstemperaturen oder benachbarte untere kritische Mischungstemperaturen der thermoresponsiven Polymere zumindest abschnittsweise innerhalb des Temperaturbereichs zwischen $T_A$ und $T_E$ einen im Wesentlichen gleichen Abstand zueinander auf.

Vorteile dieser Ausführungsform ergeben sich aus einer erhöhten Zuverlässigkeit getroffener Aussagen, wenn der betreffende Messbereich über gleichmäßig enge Abstände gesichert ist, die resultierende Messgenauigkeit ist einfach höher. Selbst wenn die Abstände nicht gleich sind, so lässt sich das mit Hilfe der Kalibrierkurve kompensieren. Gemäß einer Weiterbildung dieser Ausführungsform liegen innerhalb des abgedeckten Temperaturbereichs ungleiche Abstände vor, wobei die Abstände in jenem Abschnitt besonders eng gewählt werden, wo eine höhere Genauigkeit der Temperaturmessung benötigt wird.

Gemäß einer weiteren Ausführungsform ist eine Konzentration der thermoresponsiven Polymere in der Polymermischung so gewählt, dass ein einzelnes von $n$ thermoresponsiven Polymeren der Polymermischung die optische Transparenz der gelierten oder der gelösten thermoresponsiven Polymere maximal um $\frac{100}{n}$ % absenkt.

Vorteile dieser Ausführungsform kommen besonders bei der Anwesenheit einer größeren Anzahl unterschiedlicher Polymere, beispielsweise bei einer Polymermischung, umfassend fünf thermoresponsive Polymere, zum Tragen. Der Bereich der Temperaturmessung kann so erweitert werden. Da bei einer grafischen Auftragung der optischen Transparenz gegen die Temperatur die Messkurve flacher wird, sinkt zwangsläufig die Messgenauigkeit.

Gemäß einer weiteren Ausführungsform umfasst das Lösungs- und/oder Quellmittel eine Flüssigkeit, die ausgewählt ist unter Wasser.

Vorteile dieser Ausführungsform bestehen darin, dass chemisch unterschiedliche Polymere dispergiert bzw. in Lösung gebracht werden können. Ebenso sind Lösungsmittelgemische verwendbar.

Gemäß einer weiteren Ausführungsform ist zumindest eines der thermoresponsiven Polymere ausgewählt unter einem synthetischen Polymer, umfassend zumindest eine Acrylamid-, Methacrylamid- oder Methacrylateinheit.

Vorteile dieser Ausführungsform bestehen in der geringfügigen Anfälligkeit solcher Polymere für eine Hydrolyse. Im Ergebnis dessen ist eine verbesserte Langzeitstabilität der Sensoren zu erwarten, als wenn beispielsweise Polysacharid-basierte Polymere verwendet würden, die bekanntermaßen besonders anfällig für eine Hydrolyse oder für eine enzymatische Zersetzung sind. Diese Nachteile werden durch die genannten synthetischen Polymere überwunden.

Gemäß einer weiteren Ausführungsform weisen die thermoresponsiven Polymere keine Wasserstoffbrückendonoren auf.

Ein besonderer Vorteil besteht darin, dass die Polymerketten untereinander weniger Wechselwirkungsmöglichkeiten haben und damit eine verminderte Neigung zu Hysteresephänomenen aufweisen.

Gemäß einer weiteren Ausführungsform sind die thermoresponsiven Polymere ausgewählt unter: Poly(Diethylacrylamid-co-Dimethylacrylamid)en, abgekürzt als Poly(DEAM-co-DMAM) oder Poly(Methoxyethoxyethylmethacrylat-co-Oligoethylenglykolmethacrylat)en, abgekürzt als Poly(ME02MA-co-OEGMA).

Vorteile dieser Ausführungsform bestehen in der vergleichsweise leichten Zugänglichkeit und Stabilität dieser Polymere in wässrigen und organischen Lösungen.

Gemäß einer weiteren Ausführungsform wird vorgeschlagen, die Polymermischung nach einer der vorstehend benannten Ausführungsformen in einem faseroptischen Messsystem zur Messung einer Temperatur zu verwenden. Das Messsystem umfasst:

- ein temperatursensitives Element, umfassend die Polymermischung gemäß einer der beschriebenen Ausführungsformen;

- mindestens eine lichtleitende optische Faser;

- eine Lichtquelle; und

- mindestens einen optischen Detektor;

wobei das temperatursensitive Element mit mindestens einer lichtleitenden optischen Faser verbunden ist, sodass Licht der Lichtquelle zum temperatursensitiven Element und von dort zum optischen Detektor geführt werden kann, sodass eine durch die Polymermischung veränderbare Transparenz des temperatursensitiven Elements vom optischen Detektor detektierbar ist und einer Temperatur am temperatursensitiven Element zuordenbar ist.

Vorteile dieser Ausführungsform bestehen neben den bereits genannten Vorteilen, die im engeren Sinne das Prinzip der optischen Temperaturmessung mit Hilfe von thermoresponsiven Polymeren betreffen, in der Robustheit des vorgeschlagenen Messsystems. Damit erlaubt die beschriebene Verwendung eine zuverlässige Temperaturbestimmung auch unter widrigen äußeren Bedingungen. Beispielsweise kann ein faseroptischer Temperatursensor, umfassend ein geeignet dimensioniertes temperatursensitives Element (Behälter mit der Polymermischung, umfassend zumindest zwei thermoresponsive Polymere) in ein Kleidungsstück / Schutzbekleidung integriert werden.

Gemäß einer weiteren Ausführungsform der vorstehend vorgeschlagenen Verwendung umfasst das temperatursensitive Element des Messsystems einen Behälter, in dem eine Polymermischung gemäß einer der vorstehend beschriebenen Ausführungsformen angeordnet ist.

Vorteile dieser Ausführungsform bestehen darin, dass mit Hilfe eines entsprechend geformten Behälters eine Anpassung erfolgen kann - einerseits eine vergleichsweise lange Messstrecke (Schichtdicke), - andererseits eine an die spezielle Geometrie des zu charakterisierenden Objektes (Oberfläche).

Gemäß einer weiteren Ausführungsform wird ein den Behälter passierendes optisches Signal temperaturabhängig gedämpft.

Vorteile dieser Ausführungsform bestehen darin, dass gerade die Dämpfung bzw. die Lichtleistung eines Signals mit Hilfe der breit verfügbaren Messtechnik gut messbar ist und mit Hilfe einer Kalibrieranordnung der gemessenen Lichtleistung eine spezifische Temperatur zugeordnet und diese somit abgesichert werden kann.

Gemäß einer weiteren Ausführungsform ist die Lichtquelle des Messsystems ausgewählt unter: einer LED, einer OLED, einem Laser, einer Glühlampe, einer Leuchtstofflampe oder einer Gasentladungslampe.

Vorteile dieser Ausführungsform bestehen darin, dass der bevorzugte Wellenlängenbereich allein schon durch die geeignete Wahl der Lichtquelle spezifiziert werden kann, sodass zusätzliche optische Komponenten, die das System nur verteuern und anfälliger machen, vermieden werden können.

Gemäß einer weiteren Ausführungsform ist das temperatursensitive Element mit dem Detektor über eine lichtleitende optische Faser verbunden.

Vorteile dieser Ausführungsform bestehen in einer unmittelbaren und verlustarmen Signalübertragung vom Behälter zum Detektor.

Gemäß einer weiteren Ausführungsform ist der optische Detektor so angepasst, dass eine Veränderung einer Lichtleistung eines von der Lichtquelle ausgehenden und den Behälter passierenden Lichts detektierbar ist.

Vorteile dieser Ausführungsform bestehen darin, dass eine temperaturinduzierte Änderung der optischen Eigenschaften der die temperatursensitiven Polymere enthaltenden Polymermischung quantifizierbar wird.

Gemäß einer weiteren Ausführungsform entspricht die detektierte und sich verändernde Lichtleistung einer im Behälter erfolgenden optischen Dämpfung.

Vorteile dieser Ausführungsform bestehen darin, dass bei geeigneter Kalibrierung der Messanordnung eine temperaturgetriggerte Trübung (Dämpfung eines optischen Signals) einem Temperaturwert zugeordnet werden kann und somit eine Temperatur eineindeutig erfassbar ist.

Gemäß einer weiteren Ausführungsform umfasst das faseroptische Messsystem weiterhin ein erstes faseroptisches Kopplungselement, wobei das erste faseroptische Kopplungselement durch mindestens eine optische Faser mit der Lichtquelle verbunden ist, und mindestens eine weitere optische Faser das erste faseroptische Kopplungselement mit dem thermosensitiven Element verbindet.

Vorteile dieser Ausführungsform ergeben sich aus der Einfachheit des Aufbaus des Messsystems. Die Integration eines faseroptischen Kopplungselements ermöglicht die Erweiterung um einen zusätzlichen Messpfad, ohne eine weitere Lichtquelle einzusetzen.

Gemäß einer weiteren Ausführungsform verbindet mindestens eine optische Faser das thermosensitive Element mit dem Detektor.

Vorteile dieser Ausführungsform bestehen in einer unmittelbaren und verlustarmen Signalübertragung vom Behälter zum Detektor.

Gemäß einer weiteren Ausführungsform verbindet mindestens eine optische Faser das faseroptische Kopplungselement mit einem Detektor.

Vorteile dieser Ausführungsform bestehen darin, dass das optische Signal vom ersten faseroptischen Kopplungselement direkt zu einem Detektor geführt wird, wobei kein thermosensitives Element in diesem Pfad vorhanden ist, das eine dementsprechend temperaturinduzierte optische Dämpfung verursachen kann. Somit wird lediglich eine mögliche, von außen z.B. durch mechanische Deformation der optischen Fasern des Referenzmesspfads induzierte Dämpfung vom Detektor erfasst.

Gemäß einer weiteren Ausführungsform verlaufen die vorstehend genannten verschiedenen optischen Fasern parallel zueinander und sind mechanisch sowie thermisch miteinander gekoppelt.

Vorteile dieser Ausführungsform ergeben sich aus der Kompensation einer ggf. durch die Faser verursachten Dämpfung. Beispielsweise kann mechanisches Knicken einen erheblichen Signalverlust bewirken. Ist das Messsystem in ein Kleidungsstück / Schutzbekleidung integriert, so kann bei der Bewegung des Trägers eine Deformation der Fasermessstrecke auftreten. Derartige Signalveränderungen können durch die Vergleichsfaser zweifelsfrei als temporäre Störungen erkannt und ausgesondert werden. Somit ist eine Kompensation dieser Störungen möglich, was die Zuverlässigkeit der erfassten Signale verbessert.

Gemäß einer weiteren Ausführungsform umfasst das faseroptische Messsystem ein zweites faseroptisches Kopplungselement und das zweite faseroptische Kopplungselement ist mit dem thermosensitiven Element und mit dem Detektor jeweils über mindestens eine optische Faser verbunden.

Vorteile dieser Ausführungsform entsprechen den bereits geschilderten. Mit Hilfe des zweiten faseroptischen Kopplers kann auf die Verwendung eines zweiten Detektors verzichtet werden, was das Messsystem vereinfacht.

Gemäß einer weiteren Ausführungsform sind das erste und das zweite faseroptische Kopplungselement unabhängig voneinander ausgewählt unter: einem faseroptischen Koppler, einem faseroptischen Multiplexer und/oder einem faseroptischen Schalter.

Vorteile dieser Ausführungsform bestehen in der Flexibilität bei der Auswahl der Art des faseroptischen Kopplungselements, was eine gute Anpassbarkeit an die spezifische Messaufgabe ermöglicht.

Gemäß einer weiteren Ausführungsform sind das erste und das zweite faseroptische Kopplungselement über eine optische Faser miteinander verbunden.

Vorteile dieser Ausführungsform bestehen darin, dass das optische Signal vom ersten faseroptischen Kopplungselement über das zweite faseroptische Kopplungselement direkt zu einem Detektor geführt wird, wobei kein thermosensitives Element in diesem Pfad vorhanden ist, das eine dementsprechend temperaturinduzierte optische Dämpfung verursachen kann. Somit wird lediglich eine mögliche, von außen z.B. durch mechanische Deformation der optischen Fasern des Referenzmesspfads induzierte Dämpfung vom Detektor erfasst.

Gemäß einer weiteren Ausführungsform verlaufen die vorstehend benannten optischen Fasern parallel zueinander und sind mechanisch sowie thermisch miteinander gekoppelt.

Vorteile dieser Ausführungsform ergeben sich aus der Kompensation einer ggf. durch die Faser verursachten Dämpfung. Beispielsweise kann mechanisches Knicken einen erheblichen Signalverlust bewirken. Ist das Messsystem in ein Kleidungsstück / Schutzbekleidung integriert, so kann bei der Bewegung des Trägers eine Deformation der Fasermessstrecke auftreten. Derartige Signalveränderungen können durch die Vergleichsfaser zweifelsfrei als temporäre Störungen erkannt und ausgesondert werden. Somit ist eine Kompensation dieser Störungen möglich, was die Zuverlässigkeit der erfassten Signale verbessert.

Gemäß einer weiteren Ausführungsform wird die Verwendung des vorstehend beschriebenen faseroptischen Messsystems zur Erfassung des Temperaturverlaufs und/oder einer Temperatur der Hautoberfläche eines warmblütigen Organismus vorgeschlagen.

Vorteile dieser Ausführungsform ergeben sich aus der Anwendbarkeit der beschriebenen Messanordnung im Temperaturbereich 36,5 bis 40 °C. Beispielsweise kann die Körpertemperatur einer Person zuverlässig und kontinuierlich überwacht werden. Ein besonderer Vorteil dieses Temperaturbereiches ergibt sich daraus, dass für bestimmte Einsatzbedingungen die physische Leistungsfähigkeit und volle Urteilsfähigkeit der überwachten Person besonders bedeutsam sind. Außerhalb dieses Temperaturbereiches sind diese in Zweifel zu ziehen und ggf. unmittelbar Rettungsmaßnahmen einzuleiten.

Gemäß einer weiteren Ausführungsform wird ein Temperaturmessverfahren vorgeschlagen, umfassend:

- Bereitstellen eines Behälters, umfassend eine Polymermischung gemäß zumindest einer der oben stehenden Ausführungsformen;

- Bereitstellen einer Lichtquelle, eines optischen Detektors und von optischen Fasern;

- Einkoppeln von Licht einer Lichtquelle in den Behälter und den Detektor mit Hilfe der optischen Fasern, wobei von der Lichtquelle zum Detektor gelangendes Licht auf seinem Weg zum Detektor den Behälter zumindest teilweise passiert;

- Messen der optischen Leistung des Lichts, das die im Behälter befindliche Polymermischung durchstrahlt hat;

- Zuordnen der am Detektor erfassten Lichtleistung zu einer Temperatur im Behälter und Feststellen eines Temperaturwertes am Behälter;

- optionales Übertragen des festgestellten Temperaturwertes an eine Kontroll- und Überwachungseinheit.

Die Vorteile dieser Ausführungsform entsprechen den bereits geschilderten Vorteilen der optischen Temperaturmessung: Die Veränderung eines Streulichtsignals einer Polymermischung ist mit einer wie hier beschrieben konfigurierten Messanordnung unter definierten Messbedingungen zuverlässig bestimmbar. Bei entsprechender Kalibrierung der Messanordnung können Temperaturmessungen in einem gewünschten Temperaturbereich reproduzierbar vorgenommen werden.

Gemäß einer weiteren Ausführungsform des vorgeschlagenen Temperaturmessverfahrens wird von der Lichtquelle ausgehendes Licht ohne den Behälter zu passieren zum Detektor geführt und dient als ein Referenzsignal zur Kompensation einer parasitären Dämpfung durch die optische Faser.

Vorteile dieser Ausführungsform ergeben sich mit der Möglichkeit, extern verursachte Störungen als solche erkennen zu können und bei der Beurteilung von Messwerten durch Subtraktion berücksichtigen zu können.

Gemäß einer weiteren Ausführungsform beträgt eine Messgenauigkeit des vorgeschlagenen Temperaturmessverfahrens ± 0,1 K.

Vorteile dieser Ausführungsform bestehen in der hohen Genauigkeit der mit Hilfe einer vergleichsweise robusten und kostengünstig herstellbaren Messanordnung erhobenen Daten.

Gemäß einer weiteren Ausführungsform wird ein faseroptisches Messsystem zur Messung einer Temperatur vorgeschlagen. Es umfasst:

- ein temperatursensitives Element (101, 201, 301);

- mindestens eine lichtleitende optische Faser (102, 103, 202, 205, 206, 208, 302, 305, 306, 308, 310);

- eine Lichtquelle (104, 203, 303); und

- mindestens einen optischen Detektor (105, 207, 209, 309),

wobei das temperatursensitive Element eine Polymermischung gemäß zumindest einer der oben beschriebenen Ausführungsformen umfasst.

Die Vorteile dieser Ausführungsform entsprechen den bereits vorstehend geschilderten.

Gemäß einer weiteren Ausführungsform weist der Behälter einen metallischen Werkstoff auf, insbesondere umfasst eine Wandung des Behälters eine Metallplatte.

Vorteile dieser Ausführungsform ergeben sich aus der hervorragenden Wärmeleitfähigkeit von Metallen. Die Temperatur der zu charakterisierenden Oberfläche wird bei formschlüssigem Kontakt des Messbehälters zur Oberfläche des Messobjektes direkt und nahezu verlustlos weitergegeben.

Die beschriebenen Ausführungsformen können beliebig miteinander kombiniert werden.

Mit dem erfindungsgemäßen Sensor kann die Körpertemperatur von Personen quasi in Echtzeit und ununterbrochen erfasst werden. Dabei ist durch eine Integration des Sensorsystems, beispielsweise in die Bekleidung, zugleich ein hoher Tragekomfort gewährleistet. Insbesondere bei Personen, die unter Extrembedingungen eingesetzt werden und dabei besonderen Risiken ausgesetzt sind, ist eine ständige Körpertemperaturüberwachung erstrebenswert. So werden z.B. Feuerwehrleute durch das Meßsystem nicht in ihrer Beweglichkeit eingeschränkt, was ein wesentliches Kriterium für die praktische Brauchbarkeit ihrer Ausrüstung darstellt. Im Medizinsektor spielt die Langzeitüberwachung der Körpertemperatur von Patienten eine wichtige Rolle, sowohl im stationären/klinischen Bereich als auch bei der Pflege im eigenen Heim. Auch hier ist die Körpertemperatur ein wichtiger Vitalparameter, der es in Kombination mit weiteren Parametern ermöglicht, kritische Situationen frühzeitig zu erkennen und rechtzeitig Gegenmaßnahmen zum Schutz der überwachten Person zu ergreifen.

Für die Temperaturmessung mit faseroptischen Sensoren gibt es derzeit mehrere Messmethoden, die auch in kommerziell erhältlicher Messtechnik eingesetzt werden. Sie sind im Folgenden einzeln erläutert.

Eine Variante beinhaltet als Sensorelement ein Faser-Bragg-Gitter (FBG). Dieses FBG wird dauerhaft in eine optische Faser eingeschrieben. An diesem Gitter wird Licht in einem schmalen Wellenlängenbereich reflektiert, wobei die Mittenwellenlänge als Bragg-Wellenlänge $\lambda_B$ bezeichnet wird und die eigentliche Messgröße darstellt. Das FBG kann mit einer Länge von einigen Millimetern als Punktsensor angesehen werden. Die Bragg-Wellenlänge ist temperaturabhängig, somit kann das FBG als Temperatursensor eingesetzt werden.

Weiterhin werden faseroptische Temperatursensoren eingesetzt, bei denen ein GaAs-Element als temperatursensitives Element verwendet wird. Das Halbleiterelement wird an das Ende einer optischen Faser angebracht und dient an dieser Stelle als Punktsensor. Der GaAs-Halbleiter hat eine temperaturabhängige Bandkante (GaAs wird ab ca. 850 nm lichtdurchlässig). Bei einer Temperaturänderung kommt es zu einer Verschiebung dieser Bandkante, die in der Regel spektral erfasst wird.

Ein weiteres Prinzip der Temperaturmessung basiert auf Fluoreszenz. Hierbei wird ein fluoreszierendes Material auf das Ende einer optischen Faser aufgebracht. Bei diesem Punktsensor wird das Material durch Licht angeregt, wobei die Abklingzeit des fluoreszierenden Materials gemessen wird. Diese Abklingzeit ist abhängig von der Temperatur, sodass bei zeitaufgelöster Erfassung des optischen Signals eine Temperatur am Punktsensor bestimmt werden kann.

Neben den bereits aufgeführten punktförmigen Sensoren gibt es eine weitere Methode, die der verteilten Temperaturmessung (DTS), bei der die optische Faser selbst als temperatursensitives Element genutzt wird. Unter Ausnutzung der Raman-Streuung in einer optischen Faser kann eine Temperaturmessung entlang der gesamten Faserstrecke durchgeführt werden. Bei der Raman-Spektroskopie wird die Raman-Streuung ortsaufgelöst erfasst, was eine verteilte Temperaturmessung entlang der optischen Faser ermöglicht.

Grundsätzlich ist bei der Körpertemperaturmessung im Falle einer Überwachung für die eingangs beschriebenen Personengruppen eine Temperaturauflösung bzw. Genauigkeit von ± 0,1 K erwünscht. Zugleich muss das Sensorelement flexibel am Körper platziert werden können, außerdem wird insbesondere beim mobilen Einsatz eine möglichst leichte, kleine und energieeffiziente Messtechnik benötigt.

Im Falle der Faser-Bragg-Gitter (FBG) ist das sensitive Element aufgrund des Herstellungsprozesses relativ teuer. Da üblicherweise eine spektrale Messung durchgeführt wird, stellt auch das Messgerät einen erheblichen Kostenfaktor dar. Bei präzisen - aber zugleich teuren - Messgeräten wird eine hohe spektrale Auflösung von bis zu 1 pm erreicht. Bei einer Temperaturempfindlichkeit des FBG von ca. 10 pm/K kann die Temperatur mit einer ausreichend hohen Auflösung gemessen werden. Der Nachteil liegt dabei - neben den Kosten - bei einem im Vergleich zu einfacheren FBG-Messgeräten höherem Gewicht und einer größeren Bauform. Kompaktere, leichtere und kostengünstigere Messgeräte sind auf dem Markt verfügbar, jedoch bieten diese Geräte eine nur unzureichende Auflösung, wodurch die zur Temperaturüberwachung im beschriebenen Einsatzgebiet erforderliche Auflösung nicht gewährleistet wird.

Im Falle des GaAs-basierten faseroptischen Temperatursensors wird bei heute erhältlichen Messgeräten häufig eine Messunsicherheit von ± 0,2 K angegeben. Die notwendige Genauigkeit wird somit nicht ganz erreicht. Einen bedeutenden Nachteil stellt hier wie auch beim FBG der Kostenfaktor dar. Das Messgerät erfasst üblicherweise das optische Spektrum, was eine verhältnismäßig teure Messtechnik bedingt. Weiterhin führt die Verwendung eines optischen Spektrometers zu einer relativ großen Bauform des Messgeräts.

Im Falle Fluoreszenz-basierter Messsysteme zur Temperaturmessung ist aufgrund der einfacheren Messmethode eine kostengünstigere Messtechnik verfügbar. Von Nachteil ist aber die übliche Messunsicherheit von ca. ± 0,5 K. Somit wird die hier erforderliche Genauigkeit nicht erreicht, weshalb das System für die hier beschriebenen Anwendungsfälle ungeeignet ist.

Im Falle der verteilten Temperaturmessung (DTS) mittels Raman-Spektroskopie ist die verfügbare Messtechnik teuer und hinsichtlich der Bauform zu groß und zu schwer für den mobilen Einsatz. Weiterhin wird bei der Raman-Sensorik heutzutage eine Ortsauflösung von etwa 1 m erreicht. Das ist für eine gezielte Temperaturmessung am Körper nicht geeignet. Außerdem liegt die Messunsicherheit bei ± 0,5 K, was ebenfalls nicht den Anforderungen genügt.

Im Patent US7307141 B2 wird ein thermoresponsiver Sensor beschrieben, der auf einer sich temperaturabhängig ändernden optischen Transparenz einer Polymerlösung basiert. Im Gegensatz zum hier vorgeschlagenen Messprinzip wird allerdings nur ein diskreter Temperaturschwellwert detektiert. Die Erfassung eines größeren Temperaturbereichs erfordert gemäß US7307141 B2 die Kombination mehrerer, räumlich voneinander getrennt angeordneten und bei verschieden Temperaturen ihre Transparenz ändernden Polymerlösungen. Ein Punktsensor kann somit nicht realisiert werden. Besonders nachteilig ist, dass es - wenn überhaupt - nur sehr umständlich möglich ist, einen größeren Temperaturbereich mit einer geringen Messunsicherheit abzudecken. Ebenso fehlt dem in US7307141 B2 beschriebenen Messsystem ein Referenzpfad, um mögliche parasitäre Dämpfungen in der optischen Faser zu kompensieren.

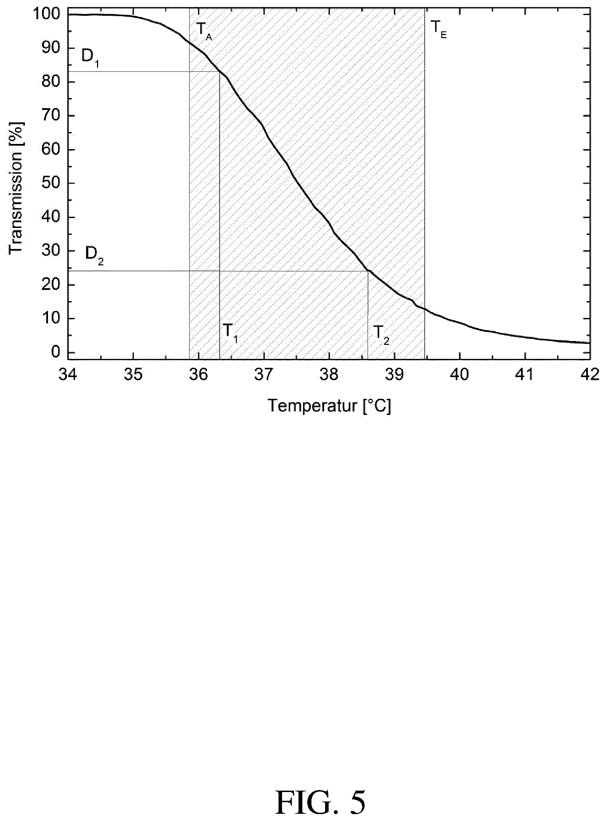

Überraschend erwies sich, dass über Trübungsmessungen an einem thermoresponsiven System nicht nur ein Temperaturschwellwert detektiert werden kann, sondern in einem definierten Temperaturbereich auch eine Temperaturmessung, d.h. die Bestimmung absoluter Temperaturwerte möglich ist. Durch eine geeignete Auswahl der thermoresponsiven Komponenten ist eine monotone Funktion der Transparenz in Abhängigkeit von der Temperatur des sensitiven Elements einstellbar. Bevorzugt werden dabei solche thermoresponsive Komponenten, deren Lösung eine geringe Hysterese zeigt. In wässrigen Medien sind dies vor allem Polymere, die Wasserstoffbrückenakzeptoren, aber keine Wasserstoffbrückendonoren aufweisen. Außerdem ist als thermoresponsive Komponente bevorzugt eine Stoffzusammensetzung bzw. eine Mischung aus einzelnen thermoresponsiven Polymeren mit jeweils diskreten unteren bzw. oberen kritischen Mischungstemperaturen vorgesehen. Das ermöglicht es, über die jeweilige Polymerzusammensetzung einen bestimmten als Arbeitsbereich geeigneten Temperaturbereich einzustellen, den jeweiligen Transparenzwert zu bestimmen und unmittelbar in einen Temperaturwert umzurechnen (vgl. Fig. 5).

Die in US7307141 B2 beschriebene Temperaturmessung umfasst lediglich den Vergleich zweier Zustände mit verschiedener Transparenz, um das Über- oder Unterschreiten eines bestimmten Temperaturschwellwertes zu erfassen. Im Gegensatz dazu wird gemäß der hier vorgeschlagenen Messanordnung die thermoresponsive Komponente als Sensorelement zur Erfassung der absoluten oder der relativen Temperatur innerhalb eines durch die Zusammensetzung der Polymerlösung (Stoffzusammensetzung / Polymermischung im Lösungsmittel oder im Lösungs- und Quellmittel oder im Quellmittel) festgelegten Temperaturbereichs eingesetzt. Das ermöglicht die Messung eines absoluten Temperaturwertes innerhalb eines definierten Bereichs. Das verbessert und erweitert die Einsetzbarkeit eines entsprechenden faseroptischen Messsystems beträchtlich. Bevorzugte Temperaturbereiche liegen im Bereich der physiologischen Körpertemperatur des Menschen, und reichen beispielsweise von 35 °C bis 42 °C, insbesondere von 36 °C bis 40 °C, beispielsweise von 36,5 °C bis 40 °C. Die vorstehend beschriebene Messanordnung weist in diesen Bereichen typischerweise eine Messgenauigkeit von $\pm$ 0,1 K auf.

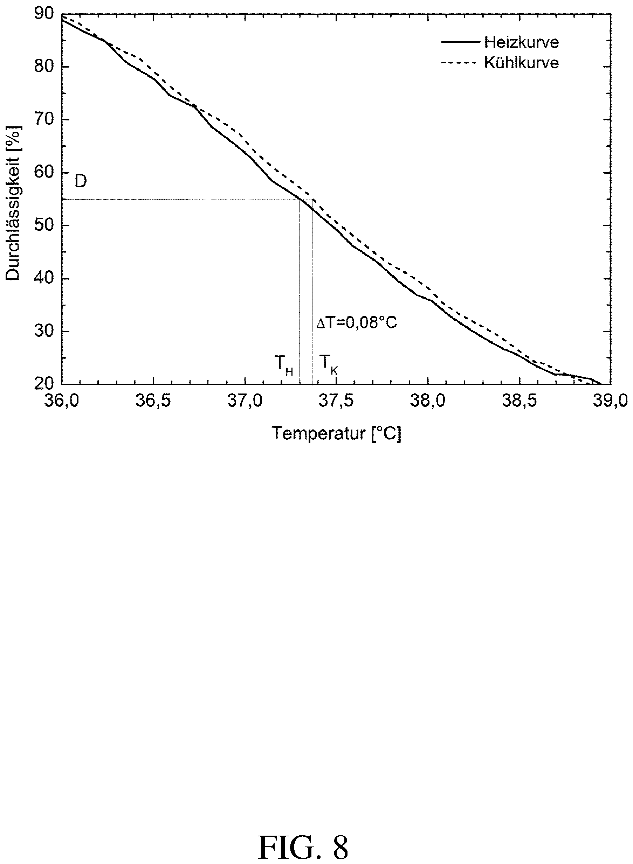

Die Messgenauigkeit von $\pm$ 0,1 K beruht auf der hohen Reproduzierbarkeit der Temperaturabhängigkeit der Trübung und auf der äußerst geringen Hysterese der Temperatur-Durchlässigkeitskurve (vgl. Fig. 8). Dies lässt sich beispielsweise mit Poly(Dialkylacrylamiden) als thermoresponsiven Komponenten in wässrigen Medien erreichen. Diese Polymere verfügen nur über Wasserstoffbrückenakzeptoren, nicht über Wasserstoffbrückendonoren. Im besonderen sind Poly(Diethylacrylamid-co-Dimethylacrylamid)e [Poly(DEAM-co-DMAM)] geeignete thermoresponsive Polymere, da durch eine Variation des Anteils an besser wasserlöslichen Dimethylacrylamid-Einheiten der Trübungsbereich über einen sehr weiten Temperaturbereich gezielt einstellbar ist.

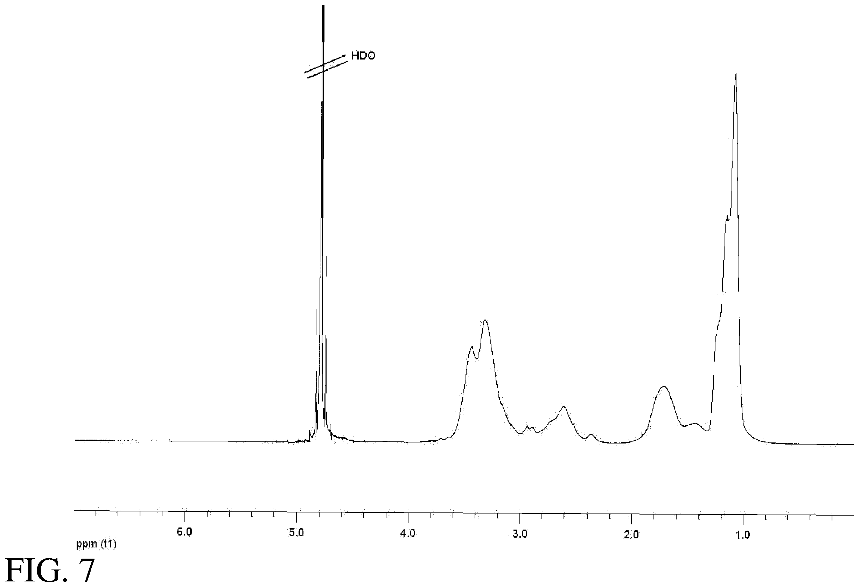

Gemäß einem praktischen Ausführungsbeispiel wurde ein Poly(DEAM-co-DMAM) mit einem Phasenübergang im physiologischen Temperaturbereich hergestellt. In einem 250 ml-Schlenkkolben wurden 5,00 g Diethylacrylamid (39,3 mmol), 0,21 g Dimethylacrylamid (2,1 mmol) und 0,35 g 2,2'-Azobis(2-Methylpropionamidin)-Dihydrochlorid (Wako V-50, 1,3 mmol) in einer Mischung aus 100 ml Ethanol und 20 ml $H_2O$ gelöst. Durch die Lösung wurde zur Entgasung über 20 min $N_2$ geleitet. Dann wurde der Kolben in einem Ölbad auf 65°C für 24 h erhitzt. Danach wurde die Reaktion durch Öffnen des Kolbens abgebrochen. Das Ethanol wurde am Rotationsverdampfer abgezogen. Die Reinigung des Polymers erfolgte durch viertägige Dialyse gegen Wasser (Schlauch Roth Zellu Trans, MWCO 4000-6000). Das Polymer wurde durch Gefriertrocknung isoliert. Die Ausbeute betrug 4,11 g (79%). Das $^1$H-NMR-Spektrum ($D_2O$) des Produkts ist in Fig. 7 gezeigt.

Die Ergebnisse der Trübungsmessung in Wasser (1,0 g·l$^{-1}$) bei 600 nm Wellenlänge mit einer Heizrate von 0,1 K·min$^{-1}$ sind in Fig. 5 dargestellt. Der Trübungspunkt (onset) liegt bei 35 °C. Eine wässrige Lösung des so hergestellten Polymeren weist bei einer Heizrate von 0,1 K·min$^{-1}$ lediglich eine geringe Hysterese auf, die in der Temperaturbestimmung zu einer Differenz von nur 0,08 K zwischen Heiz- und Kühlkurve führt (vgl. Fig. 8).

Die Trägheit des Meßsystems ist natürlich nicht nur durch die inhärenten Polymereigenschaften bestimmt, sondern auch durch die Wärmekapazität der Meßzelle und die Effektivität des Wärmeaustauschs zwischen der zu messenden Oberfläche und der Meßzelle. Deshalb sind Ausführungsformen mit einem im Vergleich zum Messobjekt kleinem Volumen V der Meßzelle (V < 10 mm$^3$) und einer großen Kontaktfläche mit der zu messenden Oberfläche bevorzugt. Daraus ergibt sich beispielsweise vorteilhaft eine abgeflachte Ausführungsform der Meßzelle. Aspektverhältnisse von 3 : 1 oder größer sind bevorzugt, wobei das Aspektverhältnis hier als Verhältnis Breite : Höhe ausgedrückt ist und wobei die breite Seite der Messzelle mit der zu messenden Oberfläche in formschlüssigen Kontakt gebracht wird.

Um die Wärmeleitung zum Meßmedium zu begünstigen, werden weiterhin für die Wände der Meßzelle Materialien mit einer hohen Wärmeleitfähigkeit bevorzugt, vor allem einem Wärmeleitfähigkeit, wie sie beispielsweise für Kupfer oder Silber typisch ist. Die Wandung der Messzelle kann beispielsweise aus Kupfer oder Messing ausgeführt sein, wobei die Oberflächen der Messzelle, beispielsweise galvanisch, vergütet sein können. Eine Oberflächenvergütung, beispielsweise mit einer Nickel-, einer Nickel-Phospor- oder einer Goldschicht sichert die Unterdrückung einer stets unerwünschten Korrosion unter Aufrechterhaltung der jeweils gewählten Oberflächenform. Die Oberflächenform ist hinsichtlich Geometrie und Rauhigkeit an die Oberfläche des Messobjektes angepasst. Der mittels Oberflächenvergütung erreichbare Korrosionsschutz gewährleistet die Aufrechterhaltung eines formschlüssigen Kontaktes der Messzelle zu der Oberfläche des Messobjektes.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

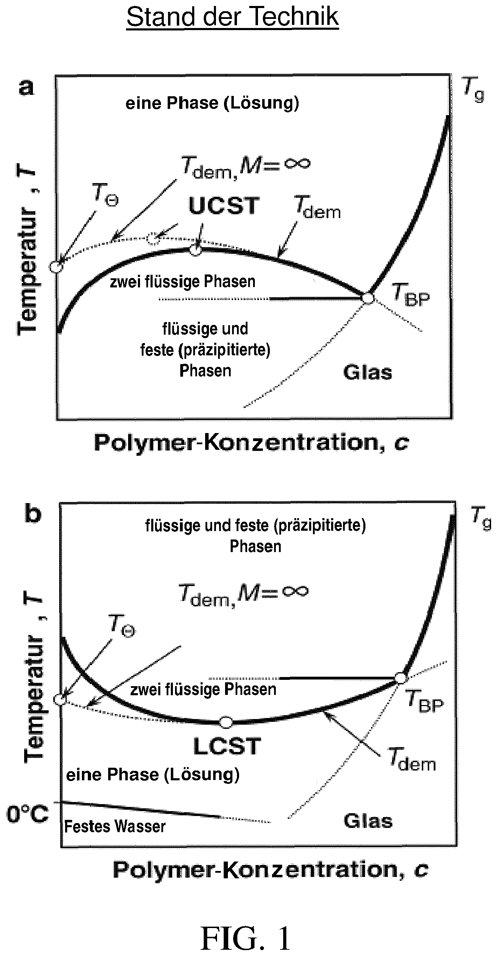

Fig. 1    zeigt im Teilbild (a) ein mögliches Phasendiagramm für Stoffzusammensetzungen mit einem Polymer, das eine obere kritische Lösungstemperatur (UCST) aufweist und im Teilbild (b) ein mögliches Phasendiagramm für Stoffzusammensetzungen mit einem Polymer, das eine untere kritische Lösungstemperatur (LCST) aufweist (Beide Grafiken stammen aus Aseyev, V.; Tenhu, H. Winnik F.M. (2011) "Nonionic thermoresponsive Polymers in water". In "Self organized nanostructures of amphiphilic block copolymers II, (Müller A.H.; Borisov, O., Eds. Springer-Verlag Berlin: Berlin, 2011; Vol. 242, S.29-89, Text wurde angepasst.);

Fig. 2    zeigt ein faseroptisches Messsystem gemäß einer ersten Ausführungsform;

Fig. 3    zeigt ein faseroptisches Messsystem gemäß einer zweiten Ausführungsform;

Fig. 4    zeigt ein faseroptisches Messsystem gemäß einer dritten Ausführungsform;

Fig. 5    zeigt das Prinzip der erfindungsgemäßen Temperaturmessung;

Fig. 6    zeigt den Einfluss einer Hysterese auf die erfindungsgemäße Temperaturmessung;

Fig. 7    zeigt das $^1$H-NMR-Spektrum ($D_2O$) des gemäß Ausführungsbeispiel synthetisierten Poly(DEAM-co-DMAM);

Fig. 8    zeigt die erfindungsgemäße Temperaturmessung am Beispiel einer wässrigen Poly(DEAM-co-DMAM)-Lösung

Zur anschaulichen Begriffserläuterung sind in Fig. 1 schematisch Phasendiagramme für jeweils ein Polymer in einem Lösungsmittel dargestellt, wobei Fig. 1a ein Phasendiagramm eines Polymers mit einer unteren kritischen Lösungstemperatur (UCST) im betreffenden Lösungsmittel zeigt. Insbesondere kann das in Fig. 1a gezeigte Phasendiagramm z.B. als jenes von einem Polystyren in Cyclohexan verstanden werden. Das Teilbild 1b zeigt schematisch ein mögliches Phasendiagramm für ein Polymer das im gewählten Lösungsmittel (hier einem wässrigen Medium, beispielsweise PiPAAm (Poly(N-isopropylacrylamid) in Wasser) eine untere kritische Lösungstemperatur (LCST) aufweist.

Gemäß den vorstehend und nachfolgend vorgeschlagenen Ausführungsformen wird die Lösungstemperatur verallgemeinert als Mischungstemperatur aufgefasst und bezeichnet, da auch ein Quellen des thermoresponsiven Polymers im betreffenden Medium im erfindungsgemäßen Sinn verwendbar sind.

In Fig. 1 bezeichnen $T$dem - die Entmischungstemperatur (demixing), d.h. diejenige Temperatur bei der eine Entmischung stattfindet. $T_\theta$ bezeichnet die Theta-Temperatur, d.h. die Temperatur, bei der das Polymer eine ideal Gauss'sche Knäuel-Konformation aufweist und einander wiederholende Einheiten einfach als kettenförmig angeordnete nicht-interagierende Moleküle eines idealen Gases betrachtet werden können. $M$ ist die Stoffmengenkonzentration im Volumen der Lösung (Molarität); $T_{BP}$ - die Temperatur am Berghmans-Punkt (vgl. Arnauts, J.; Berghmans, H., (1987) "Amorphous thermoreversible gels of atactic polystyrene". Polymer Communications, vol. 28(3), 66-68) und $T_G$ - die Glasübergangstemperatur.

Somit werden die Begriffe "untere kritische Mischungstemperatur" und "obere kritische Mischungstemperatur" im fachüblichen Sinne verwendet, so wie sich das aus den Fign. 1a und 1b ergibt. Beispielsweise ist gemäß der Definition im "Kurzlehrbuch Physikalische Chemie" (4. Auflage von Peter W. Atkins und Julio de Paula, (c) 2008; Wiley-VCH Verlag GmbH & Co. KGaA, Weinheim, ISBN 978-3-527-31807-0) die obere kritische Mischungstemperatur die höchste Temperatur, bei der noch eine Phasentrennung auftreten kann. Die obere kritische Mischungstemperatur wird auch als obere kritische Lösungstemperatur bezeichnet. Oberhalb dieser Temperatur sind die beiden Komponenten vollständig miteinander mischbar und optisch transparent. Im vorliegenden Fall sind die Komponenten, beispielsweise ein thermoresponsive Polymer und ein verwendetes Lösungsmittel und/oder Quellmittel.

Dementsprechend tritt - wie in Fig. 1b dargestellt - unterhalb der unteren kritischen Mischungstemperatur (jedoch oberhalb des Gefrierpunktes der wässrigen Lösung) keine Phasentrennung mehr auf. Es sind Stoffzusammensetzungen bekannt, die eine untere kritische Mischungstemperatur aufweisen, ebenso sind Stoffzusammensetzungen bekannt, die eine obere kritische Mischungstemperatur aufweisen. Es sind weiterhin Stoffzusammensetzungen bekannt, die sowohl eine untere kritische Mischungstemperatur als auch eine obere kritische Mischungstemperatur aufweisen. Prinzipiell sind alle Stoffzusammensetzungen mit wenigstens einer kritischen Mischungstemperatur für die hier vorgeschlagene Verwendung zur optischen, insbesondere zur faseroptischen Temperaturmessung geeignet. Ihre Auswahl erfolgt so, dass im Wellenlängenbereich der in den Behälter eingestrahlten elektromagnetischen Strahlung ein Phasenübergang optisch als Übergang transparent/opak messbar ist, sodass ein Erreichen der unteren kritischen Mischungstemperatur und/oder der oberen kritischen Mischungstemperatur optisch erfassbar ist. Verfahren zur Bestimmung einer unteren kritischen Mischungstemperatur und/oder zur Bestimmung einer oberen kritischen Mischungstemperatur sind dem Fachmann bekannt. Beispielsweise kann die Messung turbidimetrisch (Trübungsmessung) in Analogie zur Methode, wie sie in Chytry, V.; Ulbrich, K., (2001) "Conjugate of Doxorubicin with a Thermosensitive Polymer Drug Carrier". Journal of Bioactive and Biocompatible Polymers, vol. 16(6), 427-440 vorgestellt wird, kalorimetrisch (Differentialthermoanalyse) wie in Fundueanu, G. et al. (2011) "Lower critical solution temperature versus volume phase transition temperature in thermoresponsive drug delivery systems", eXPRESS Polymer Letters, vol. 5(10), 839-848 beschrieben oder osmometrisch (Osmometrie) erfolgen.

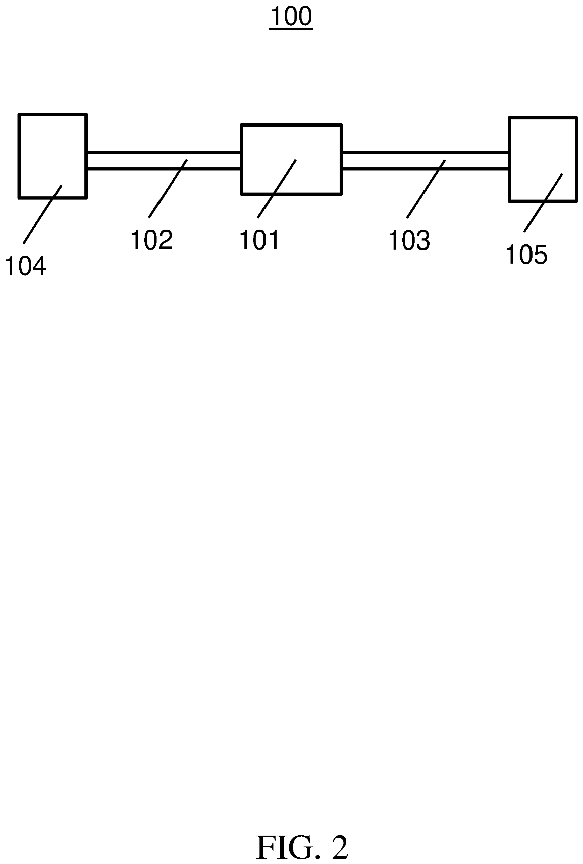

Die Fig. 2 zeigt ein faseroptisches Temperaturmesssystem 100, umfassend ein temperatursensitives Element 101, das mit lichtleitenden Fasern 102, 103 mit einem optischen Detektor 105 verbunden ist, wobei die Fasern 102, 103 Licht einer Lichtquelle 104 leiten.

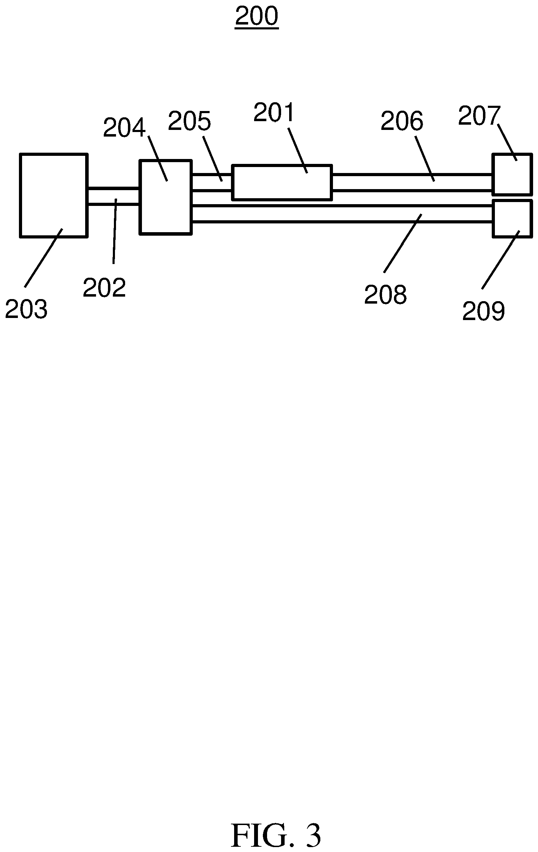

Fig. 3 zeigt ein um einen Referenzmesspfad 203-202-204-208-209 erweitertes faseroptisches Temperaturmesssystem 200. Der von der Lichtquelle 203 über die Faser 202 zum Kopplungselement 204 und den Faserabschnitt 208 zu einem zweiten optischen (Referenz-)Detektor 209 verlaufende Referenzmesspfad dient dazu, mögliche parasitäre Dämpfungen, die in der optischen Faser 205, 206 auftreten können, zu kompensieren. Der Referenzpfad sowie der das temperatursensitive Element 201 beinhaltende Messpfad liegen räumlich direkt nebeneinander und sind mechanisch miteinander verbunden, sodass äußere Einflüsse wie mechanische Belastungen oder Temperaturschwankungen auf beide Pfade gleichermaßen wirken. Als Kopplungselement 204 kommt ein faseroptischer Koppler, ein faseroptischer Multiplexer oder ein faseroptischer Schalter in Betracht.

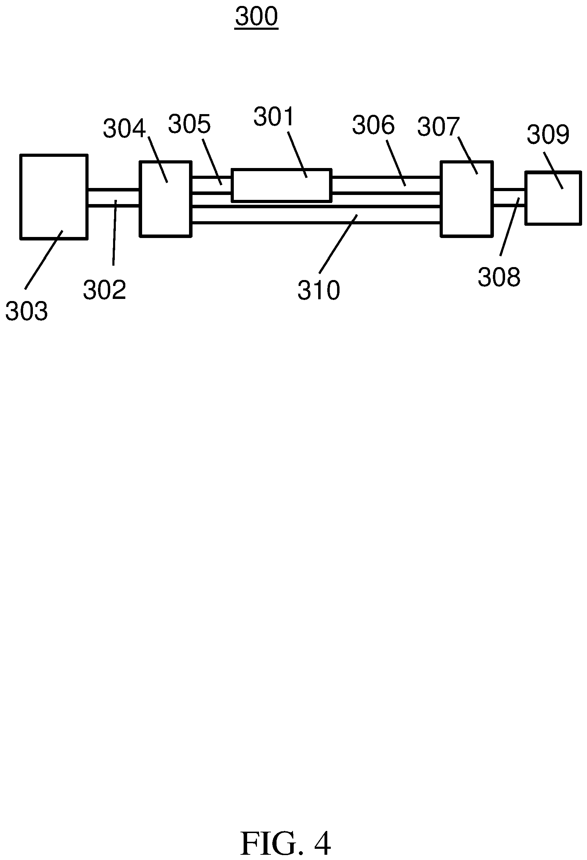

Fig. 4 zeigt das erweiterte faseroptische Temperaturmesssytem 300 mit einem weiteren Kopplungselement 307 im Referenzmesspfad 303-302-304-310-307-308-309. Der von der Lichtquelle 303 über die Faser 302 zum Kopplungselement 304 und die Faser 310 bis zum Kopplungselement 307 verlaufende Referenzmesspfad, der weiter über den Faserabschnitt 308 zum Detektor 309 führt, dient wie bei der zweiten Ausführungsform dazu, mögliche parasitäre Dämpfungen, die in der optischen Faser 305 bzw. 306 auftreten können, zu kompensieren. Auch hier müssen der Referenzpfad sowie der Messpfad räumlich direkt nebeneinander liegen, wobei beide Pfade mechanisch miteinander verbunden sind, sodass äußere Einflüsse wie mechanische Belastungen oder Temperaturschwankungen auf beide Pfade gleichermaßen wirken. Bei den Kopplungselementen 304 bzw. 307 ist zu beachten, dass maximal nur eines der beiden Elemente aus einem faseroptischen Koppler besteht, wobei das jeweils andere Element ein faseroptischer Schalter oder ein faseroptischer Multiplexer ist. Alternativ können auch beide Kopplungselemente 304 und 307 aus einem faseroptischen Schalter oder einem faseroptischen Multiplexer bestehen.

Fig. 5 zeigt das Prinzip der erfindungsgemäßen Temperaturmessung am Beispiel einer typischen von der Temperatur T abhängigen Durchlässigkeit (oder Transmission) D(T) einer thermoresponsiven Komponente. Die thermoresponsive Komponente durchläuft im Bereich zwischen den Temperaturen $T_A$ und $T_E$ einen streng monotonen Übergang von einem Zustand mit höherer optischer Durchlässigkeit $D_1$ zu einem Zustand mit geringerer optischer Durchlässigkeit $D_2$. In diesem Bereich (schraffiert unterlegt) ist jeder Wert der Durchlässigkeit D eineindeutig einer Temperatur T zugeordnet (z. B. die Durchlässigkeit $D_1$ der Temperatur Ti und die Durchlässigkeit $D_2$ der Temperatur $T_2$). Die Messung der Durchlässigkeit D ermöglicht in diesem Bereich also eine Bestimmung der Temperatur T.

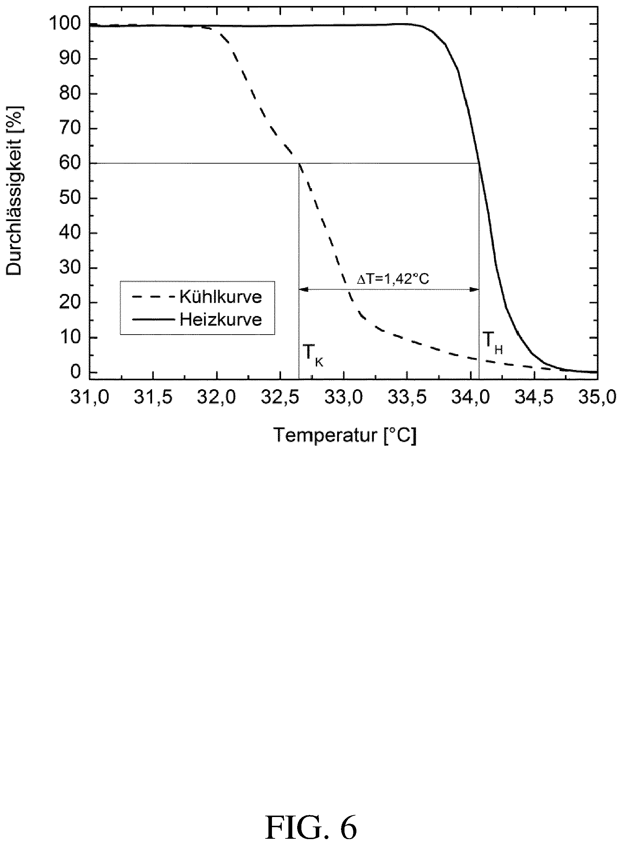

Fig. 6 veranschaulicht den Einfluss der Hysterese auf die Temperaturmessung mit einem erfindungsgemäßen Meßsystem. Sie zeigt die Auftragung der optischen Durchlässigkeit D gegen die Temperatur für eine wässrige Lösung von Poly(N-Isopropylacrylamid), wie in Lutz et al., J. Am. Chem. Soc. 128, 13046-13047 (2006) beschrieben. Hier handelt es sich um ein System, dessen thermoresponsive Komponente sowohl Wasserstoffbrückenakzeptoren als auch Wasserstoffbrückendonoren enthält, was zu einer ausgeprägten Hysterese des Systems beiträgt. Die beim Heizen der Probe gemessenen Durchlässigkeiten sind als durchgezogene Linie, die beim Kühlen gemessenen Werte als gestrichelte Linie dargestellt. Ein Wert von D ist einer Temperatur $T_H$ auf der Heizkurve und einer Temperatur $T_K$ auf der Kühlkurve zugeordnet. Durch die in diesem Beispiel sehr ausgeprägte Hysterese sind die Abweichungen zwischen Heiz- und Kühlkurve weitaus größer als sonstige Meßungenauigkeiten. Somit definiert in diesem Fall die Differenz zwischen $T_H$ und $T_K$ die maximal erreichbare Meßgenauigkeit.

Fig. 8 zeigt Heiz- und Kühlkurve einer wässrigen Lösung (1,0 g·l$^{-1}$) des gemäß dem oben beschriebenen Ausführungsbeispiel erhaltenen Poly(DEAM-co-DMAM) mit einem molaren Verhältnis von DEAM- zu DMAM-Einheiten von 95:5 bei einer Heizrate von 0,1 K·min$^{-1}$. Die durch die Hysterese bei der Temperaturbestimmung verursachte Abweichung zwischen $T_H$ und $T_K$ liegt bei 0,08 K und damit in einem für praktische Anwendungen der faseroptischen Temperaturmessung tolerablen Bereich.

Unter den eingangs beschriebenen Bedingungen können faseroptische Sensoren verwendet werden, da sie auch hier zuverlässig funktionieren.

Das sensitive Element beinhaltet eine Komponente, umfassend mindestens ein thermoresponsives Polymer, die innerhalb eines bestimmten Temperaturbereichs bei steigender Temperatur von einem optisch transparenten in einen optisch trüben (opaken) Zustand übergeht oder umgekehrt, aus einen optisch trüben Zustand in einen optisch transparenten Zustand wechselt. Die daraus resultierende Veränderung der optischen Dämpfung der Komponente wird messtechnisch erfasst. Dabei dient beispielsweise eine LED, ein Laser oder eine vergleichbare Lichtquelle zur Erzeugung von Licht. Dieses Licht wird in eine optische Faser eingekoppelt und über diese zu der temperaturresponsiven Komponente geführt. Das Licht durchstrahlt die Komponente und wird wiederum in eine weitere optische Faser eingekoppelt, die das Licht zu einem Detektor führt.

Bevorzugt handelt es sich bei der mindestens ein thermoresponsives Polymer umfassenden Komponente um eine Lösung eines thermoresponsiven Polymers oder um eine Lösung mehrerer thermoresponsiver Polymere. Alternativ können aber auch thermoresponsive Gele zum Einsatz kommen. Unter thermoresponsiven Gelen werden hier entweder Gele verstanden, bei denen die vernetzten Polymerketten, die das polymere Gerüst des Gels bilden, thermoresponsive Eigenschaften haben, oder solche Systeme, bei denen ein Gel, dessen vernetzte Struktur zumindest nicht notwendigerweise aus thermoresponsiven Einheiten aufgebaut ist, mit der Lösung mindestens eines thermoresponsiven Polymers gequollen ist. Besonders bevorzugt ist für die Komponente eine wässrige Lösung mehrerer Polymere, die in wässrigen Medien eine untere kritische Mischungstemperatur (LCST, engl.: lower critical solution temperature) aufweisen.

Wie auch aus Fig. 1 ersichtlich, wird dabei unter der unteren kritischen Mischungstemperatur diejenige Temperatur verstanden, unterhalb welcher das Polymer mit einem Lösungsmittel mischbar oder im Falle einer vernetzten Verbindung gequollen ist.

Dabei werden bevorzugt Polymere mit Phasenübergangstemperaturen gewählt, die gleichmäßig innerhalb eines Intervalls einer Anfangstemperatur $T_A$ bis zu einer Endtemperatur $T_E$ (vgl. Fig. 5) verteilt sind. Die Konzentrationen der Polymere sind bevorzugt so gering gewählt, dass ein einzelnes von n Polymeren die optische Transparenz maximal um $\frac{100}{n}$ % absenkt.

Gemäß weiterer Ausführungsformen können auch Polymere mit einer oberen kritischen Mischungstemperatur (UCST, engl.: upper critical solution temperature) eingesetzt werden.

Wie bereits erläutert, wird dabei unter der oberen kritischen Mischungstemperatur diejenige Temperatur verstanden, oberhalb welcher das Polymer mit einem Lösungsmittel mischbar oder im Falle einer vernetzten Verbindung gequollen im Quellmittel ist.

Die hier gemachten Angaben beziehen sich auf einen im Wesentlichen konstanten Druck während der Temperaturmessung.

Gemäß bevorzugten Ausführungsformen kommen als entsprechende Komponenten typischer Ausführungsformen Polymere mit einer unteren kritischen Mischungstemperatur oder Polymere mit einer oberen kritischen Mischungstemperatur zum Einsatz.

Die Vorteile der vorgeschlagenen Ausführungsformen lassen sich wie folgt zusammenfassen.

Die Verwendung optischer Fasern zur Anbindung des zumeist kleinen und unauffälligen Sensorelements an das Messgerät ermöglicht die Platzierung des Sensors an der betreffenden Position, während das meist schwerere und voluminösere Gerät zur Messwerterfassung, Datenverarbeitung und -Weiterleitung an die Stelle verlegt werden kann, wo es am wenigsten stört. Somit kommt das Sensorelement ohne elektrische Komponenten aus. Das vorgeschlagene Messsystem kann so insbesondere im Bereich der Einwirkung elektromagnetischer Felder eingesetzt werden, wo elektrische Sensoren versagen. Die benötigte Messelektronik kann sich dabei entweder außerhalb des kritischen Bereiches befinden oder vor elektromagnetischen Feldern abgeschirmt werden, ohne die Sensorfunktion zu beeinflussen.

Das vorgeschlagene Sensorsystem kann bei angepasster Auslegung über die Erfassung der Körpertemperatur hinaus auch für die Temperaturüberwachung in zahlreichen anderen Fällen eingesetzt werden, beispielsweise bei Maschinen, Fahrzeugen, in Prozessen der chemischen Industrie, der Lebensmitteltechnologie, der Papier- und Textilindustrie, etc. Die Polymere sind hinsichtlich ihrer unteren bzw. oberen kritischen Mischungstemperatur an den zu erfassenden Temperaturbereich angepasst. Somit kann eine Polymermischung für das beschriebene Sensorelement beispielsweise an die Messung einer Hautoberflächentemperatur angepasst werden, die den bezeichneten Körpertemperaturen entspricht. Ebenso kann eine Temperatur eines für die industrielle Prozesstechnik relevanten Temperaturbereichs exakt erfasst werden.

Das vorgeschlagene Messprinzip ermöglicht die exakte und wenig aufwendige Temperaturmessung auf Basis faseroptischer Sensoren. Die Messanordnung ist robust und besonders für die kontinuierliche Erfassung der Körpertemperatur von Personen in den beschrieben schwierigen oder gefährlichen Umgebungen oder Situationen geeignet, ohne die Handlungsfreiheit der betreffenden Person zu stören oder einzuschränken.

Der vorgeschlagene faseroptische Temperatursensor zeichnet sich dadurch aus, dass alle zum Messsystem gehörenden elektronischen Komponenten innerhalb des Messgeräts angeordnet sind. Es werden also keine elektrischen Signale außerhalb des Messgeräts geführt. Dies ermöglicht den Einsatz des Messsystems in Umgebungen mit starken elektromagnetischen Feldern. Die Verwendung einer optischen Faser ermöglicht die flexible Verlegung und eine entsprechende Variabilität bei der Positionierung des Sensorelements.

Vorteilhaft ermöglicht die vergleichsweise einfache Elektronik die Realisierung eines leichten, kompakten und energieeffizienten Messgeräts. Damit ist das System prädestiniert für den mobilen Einsatz, beispielsweise bei Feuerwehrleuten oder im Bergbaubereich. Das vorgeschlagene Messprinzip erlaubt eine hohe Abtastrate des Messsignals und ermöglicht somit eine Messung quasi in Echtzeit. Bei der Verwendung eines optischen Referenzpfades können parasitäre Dämpfungen, die etwa durch starke (z.B. mechanische) Belastungen der optischen Faser entstehen, eliminiert werden. Das Sensorelement kann variabel gestaltet werden. Je nach Einsatzbereich können unterschiedlich angepasste Bauformen ausgeführt werden. Je nach Anwendungsfall ist es möglich, als thermoresponsives Element eine Polymerlösung oder ein immobilisiertes Gel einzusetzen. Damit wird die mögliche Variabilität des Designs des Sensorelements weiter gesteigert.

Durch die geeignete Kombination der Polymere in der thermoresponsiven Komponente ist eine gezielte Anpassung an bestimmte Temperaturbereiche möglich. Die Verwendung einfacher elektronischer und faseroptischer Komponenten ermöglicht eine sehr kostengünstige Herstellung und bietet somit sehr gute Absatzmöglichkeiten auf dem Markt.

Gemäß Ausführungsformen werden nachfolgende Aspekte benannt.

1. Stoffzusammensetzung für einen faseroptischen Temperatursensor, umfassend ein erstes thermoresponsives Polymer und ein Lösungs- und/oder Quellmittel, wobei die Stoffzusammensetzung angepasst ist, sodass sie bei einer Temperatur T oberhalb einer Anfangstemperatur $T_A$ und unterhalb einer Endtemperatur $T_E$ einen monotonen Verlauf einer optischen Transparenz in Abhängigkeit von der Temperatur T aufweist, sodass eine Messung der optischen Transparenz der Stoffzusammensetzung eine optische Bestimmung der Temperatur T erlaubt, wobei $T_E > T > T_A$.

2. Stoffzusammensetzung nach Aspekt 1, wobei das erste thermoresponsive Polymer eine untere kritische Mischungstemperatur oder eine obere kritische Mischungstemperatur aufweist.

3. Stoffzusammensetzung nach Aspekt 2, weiter umfassend zumindest ein zweites thermoresponsives Polymer, wobei das erste thermoresponsives Polymer und das zumindest zweite thermoresponsive Polymer unterschiedliche untere kritische Mischungstemperaturen oder unterschiedliche obere kritische Mischungstemperaturen aufweisen.

4. Stoffzusammensetzung nach einem der vorstehenden Aspekte, wobei der monotone Verlauf der optischen Transparenz über einen Temperaturbereich von der Anfangstemperatur $T_A$ bis zur Endtemperatur $T_E$ reicht, wobei $T_E - T_A \geq 3$ K, insbesondere $T_E - T_A \geq 5$ K.

5. Stoffzusammensetzung nach einem der vorstehenden Aspekte, wobei der monotone Verlauf im Temperaturbereich von 5 °C bis 95 °C liegt, insbesondere von 35 °C bis 40 °C reicht, sich beispielsweise von 36,5 °C bis 40 °C erstreckt.

6. Stoffzusammensetzung nach einem der Aspekte 3 bis 5, wobei benachbarte obere kritische Mischungstemperaturen oder benachbarte untere kritische Mischungstemperaturen der thermoresponsiven Polymere innerhalb des Temperaturbereichs zwischen $T_A$ und $T_E$ einen im Wesentlichen gleichen Abstand zueinander aufweisen.

7. Stoffzusammensetzung nach einem der Aspekte 3 bis 6, wobei eine Konzentration der thermoresponsiven Polymere so gewählt ist, dass ein einzelnes von $n$ thermoresponsiven Polymeren der Stoffzusammensetzung die optische Transparenz der Stoffzusammensetzung maximal um $\dfrac{100}{n}$ % absenkt.

8. Stoffzusammensetzung nach einem der vorstehenden Aspekte, wobei das Lösungs-und/oder Quellmittel eine Flüssigkeit ist, die ausgewählt ist unter Wasser oder einer bei Raumtemperatur flüssigen organischen Verbindung.

9. Stoffzusammensetzung nach einem der Aspekte 3 bis 8, wobei zumindest eines der thermoresponsiven Polymere ausgewählt ist unter einem synthetischen Polymer, umfassend zumindest eine Acrylamid-, Methacrylamid- oder Methacrylateinheit.

10. Stoffzusammensetzung nach einem der Aspekte 3 bis 9, wobei die thermoresponsiven Polymere keine Wasserstoffbrückendonoren aufweisen.

11. Stoffzusammensetzung nach einem der Aspekte 3 bis 10, wobei die thermoresponsiven Polymere ausgewählt sind unter Poly(Diethylacrylamid-co-Dimethylacrylamid)en oder Poly(Methoxyethoxyethylmethacrylat-co-Oligoethylenglykolmethacrylat)en.

12. Verwendung einer Stoffzusammensetzung nach einem der Aspekte 1 bis 11 in einem faseroptischen Messsystem (100, 200, 300) zur Messung einer Temperatur, umfassend:

- ein temperatursensitives Element (101, 201, 301), umfassend die Stoffzusammensetzung;

- mindestens eine lichtleitende optische Faser (102, 103, 202, 205, 206, 208, 302, 305, 306, 308, 310);

- eine Lichtquelle (104, 203, 303); und

- mindestens einen optischen Detektor (105, 207, 209, 309);

wobei das temperatursensitive Element mit mindestens einer lichtleitenden optischen Faser (102, 103) verbunden ist, sodass Licht der Lichtquelle zum temperatursensitiven Element und von dort zum optischen Detektor geführt werden kann, sodass eine durch die Stoffzusammensetzung veränderbare Transparenz des temperatursensitiven Elements vom optischen Detektor detektierbar ist und einer Temperatur am temperatursensitiven Element zuordenbar ist.

13. Verwendung nach Aspekt 12, wobei das temperatursensitive Element (101, 201, 301) einen Behälter umfasst, in dem eine Stoffzusammensetzung gemäß einem der Aspekte 1 bis 11 angeordnet ist.

14. Verwendung nach einem der Aspekte 12 oder 13, wobei ein den Behälter passierendes optisches Signal temperaturabhängig gedämpft wird.

15. Verwendung nach Anspruch 14, wobei die Lichtquelle (104) ausgewählt ist unter: einer LED, einer OLED, einem Laser, einer Glühlampe, einer Leuchtstofflampe oder einer Gasentladungslampe.

16. Verwendung nach einem der Aspekte 12 bis 15, wobei das temperatursensitive Element mit dem Detektor (105) über eine lichtleitende optische Faser (103) verbunden ist.

17. Verwendung nach einem der Aspekte 12 bis 16, wobei der optische Detektor (105) so angepasst ist, dass eine Veränderung einer Lichtleistung eines von der Lichtquelle ausgehenden und den Behälter passierenden Lichts detektierbar ist.

18. Verwendung nach Aspekt 17, wobei die detektierte und sich verändernde Lichtleistung einer im Behälter erfolgenden optischen Dämpfung entspricht.

19. Verwendung nach einem der vorstehenden Aspekte, wobei das faseroptische Messsystem weiter umfasst:

- ein erstes faseroptisches Kopplungselement (204, 304),

wobei das erste faseroptische Kopplungselement (204, 304) durch mindestens eine optische Faser (202, 302) mit der Lichtquelle (203, 303) verbunden ist, und mindestens eine weitere optische Faser (205, 305) das erste faseroptische Kopplungselement mit dem thermosensitiven Element (201, 301) verbindet.

20. Verwendung nach Aspekt 19, wobei mindestens eine optische Faser (206) das thermosensitive Element (201) mit dem Detektor (207) verbindet.

21. Verwendung nach Aspekt 20, wobei mindestens eine optische Faser (208) das faseroptische Kopplungselement (204) mit einem Detektor (209) verbindet.

22. Verwendung nach Aspekt 21, wobei die optischen Fasern (205, 206, 208) parallel zueinander verlaufen und mechanisch sowie thermisch miteinander gekoppelt sind.

23. Verwendung nach Aspekt 22, wobei das faseroptische Messsystem ein zweites faseroptisches Kopplungselement (307) umfasst, und das zweite faseroptische Kopplungselement mit dem thermosensitiven Element (301) und mit dem Detektor jeweils über mindestens eine optische Faser (306, 309) verbunden ist.

24. Verwendung nach Aspekt 23, wobei das erste und das zweite faseroptische Kopplungselement (307) unabhängig voneinander ausgewählt ist unter: einem faseroptischen Koppler, einem faseroptischen Multiplexer und/oder einem faseroptischen Schalter.

25. Verwendung nach Aspekt 24, wobei das erste und das zweite faseroptische Kopplungselement (304, 307) über eine optische Faser (310) miteinander verbunden sind.

26. Verwendung nach Aspekt 25, wobei die optischen Fasern (305, 306, 310) parallel zueinander verlaufen und mechanisch sowie thermisch miteinander gekoppelt sind.

27. Verwendung eines faseroptischen Messsystems gemäß einem der vorstehenden Aspekte zur Erfassung des Temperaturverlaufs und/oder einer Temperatur der Hautoberfläche eines warmblütigen Organismus.

28. Temperaturmessverfahren, umfassend:

- Bereitstellen eines Behälters, umfassend eine Stoffzusammensetzung gemäß zumindest einem der Aspekte 1 bis 11;

- Bereitstellen einer Lichtquelle (104, 203, 303), eines optischen Detektors (105, 207, 209, 309) und von optischen Fasern (102, 103, 202, 205, 206, 208, 302, 305, 306, 308, 310);

- Einkoppeln von Licht einer Lichtquelle in den Behälter und den Detektor mit Hilfe der optischen Fasern, wobei von der Lichtquelle zum Detektor gelangendes Licht auf seinem Weg zum Detektor den Behälter zumindest teilweise passiert;

- Messen der optischen Leistung des Lichts, das die im Behälter befindliche Stoffzusammensetzung durchstrahlt hat;

- Zuordnen der am Detektor erfassten Lichtleistung zu einer Temperatur im Behälter und Feststellen eines Temperaturwertes am Behälter;

- optionales Übertragen des festgestellten Temperaturwertes an eine Kontroll- und Überwachungseinheit.

29. Temperaturmessverfahren nach Aspekt 28, wobei von der Lichtquelle ausgehendes Licht ohne den Behälter zu passieren zum Detektor geführt wird und als ein Referenzsignal zu einer Kompensation einer parasitären Dämpfung durch die optische Faser dient.

30. Temperaturmessverfahren nach einem der Aspekte 28 oder 29, wobei eine Messgenauigkeit $\pm$ 0,1 K beträgt.

31. Faseroptisches Messsystem (100, 200, 300) zur Messung einer Temperatur, umfassend:

- ein temperatursensitives Element (101, 201, 301);

- mindestens eine lichtleitende optische Faser (102, 103, 202, 205, 206, 208, 302, 305, 306, 308, 310);

- eine Lichtquelle (104, 203, 303); und

- mindestens einen optischen Detektor (105, 207, 209, 309),

wobei das temperatursensitive Element eine Stoffzusammensetzung gemäß zumindest einem der Aspekte 1 bis 11 umfasst.

32. Faseroptisches Messsystem nach Aspekt 31, wobei der Behälter einen metallischen Werkstoff umfasst.

Die vorliegende Erfindung wurde anhand von Ausführungsbeispielen erläutert. Diese Ausführungsbeispiele sollten keinesfalls als einschränkend für die vorliegende Erfindung verstanden werden. Die nachfolgenden Ansprüche stellen einen ersten, nicht bindenden Versuch dar, die Erfindung allgemein zu definieren.

**Patentansprüche**

1. Polymermischung zur faseroptischen Temperaturmessung in einem Temperaturbereich von 5 bis 95°C, umfassend:

   - ein erstes thermoresponsives Polymer,
   - zumindest ein zweites thermoresponsives Polymer, und
   - ein Lösungs- und/oder Quellmittel,

   wobei das erste und das zumindest zweite thermoresponsive Polymer wasserlöslich sind und Wasserstoffbrückenakzeptoren, aber keine Wasserstoffbrückendonoren aufweisen,
   wobei das erste thermoresponsives Polymer und das zumindest zweite thermoresponsive Polymer unterschiedliche untere kritische Mischungstemperaturen oder unterschiedliche obere kritische Mischungstemperaturen aufweisen, und
   die Polymermischung angepasst ist, sodass sie bei einer Temperatur T oberhalb einer Anfangstemperatur $T_A$ = 5 °C und unterhalb einer Endtemperatur $T_E$ = 95 °C einen monotonen Verlauf einer optischen Transparenz in Abhängigkeit von der Temperatur T aufweist, sodass eine Messung der optischen Transparenz der Polymermischung eine optische Bestimmung der Temperatur T erlaubt, wobei $T_E > T > T_A$.

2. Polymermischung nach Anspruch 1, wobei der monotone Verlauf der optischen Transparenz über einen Temperaturbereich von der Anfangstemperatur $T_A$ bis zur Endtemperatur $T_E$ reicht, wobei $T_E - T_A \geq$ 3 K, insbesondere $T_E - T_A \geq$ 5 K.

3. Polymermischung nach einem der vorstehenden Ansprüche, wobei sich der monotone Verlauf im Temperaturbereich von 35 °C bis 40 °C, insbesondere von 36.5 °C bis 40 °C erstreckt.

4. Polymermischung nach einem der vorstehenden Ansprüche, wobei benachbarte obere kritische Mischungstemperaturen oder benachbarte untere kritische Mischungstemperaturen der thermoresponsiven Polymere der Polymermischung innerhalb des Temperaturbereichs zwischen $T_A$ und $T_E$ einen im Wesentlichen gleichen Abstand zueinander aufweisen.

5. Polymermischung nach einem der vorstehenden Ansprüche, wobei eine Konzentration der thermoresponsiven Polymere der Polymermischung so gewählt ist, dass ein einzelnes von n thermoresponsiven Polymeren der Polymermischung die optische Transparenz der Polymermischung maximal um

$$\frac{100}{n} \% \text{ absenkt.}$$

6. Polymermischung nach einem der vorstehenden Ansprüche, wobei das Lösungs-und/oder Quellmittel Wasser ist.

7. Polymermischung nach einem der vorstehenden Ansprüche, wobei zumindest eines der thermoresponsiven Polymere ausgewählt ist unter einem synthetischen Polymer, umfassend zumindest eine Acrylamid-, Methacrylamid- oder Methacrylateinheit.

8. Polymermischung nach einem der vorstehenden Ansprüche, wobei das erste und das zumindest zweite thermoresponsive Polymer ausgewählt ist unter Poly(Dialkylacrylamiden), Poly(Diethylacrylamid-co-Dimethylacrylamid)en [Poly(DEAM-co-DMAM] oder Poly(Methoxyethoxyethylmethacrylat-co-Oligoethylenglykolmethacrylat)en [Poly(MEO$_2$MA-co-OEGMA].

9. Verwendung einer Polymermischung nach einem der Ansprüche 1 bis 8 in einem faseroptischen Messsystem (100, 200, 300) zur Messung einer Temperatur, umfassend:

   - ein temperatursensitives Element (101, 201, 301), umfassend die Polymermischung gemäß zumindest einem der Ansprüche 1-8;
   - mindestens eine lichtleitende optische Faser (102, 103, 202, 205, 206, 208, 302, 305, 306, 308, 310);
   - eine Lichtquelle (104, 203, 303); und
   - mindestens einen optischen Detektor (105, 207, 209, 309);

   wobei das temperatursensitive Element mit mindestens einer lichtleitenden optischen Faser (102, 103) verbunden ist, sodass Licht der Lichtquelle zum temperatursensitiven Element und von dort zum optischen Detektor geführt werden kann, sodass eine durch die Polymermischung veränderbare Transparenz des temperatursensitiven Elements vom optischen Detektor detektierbar ist und einer Temperatur am temperatursensitiven Element zuordenbar ist, wobei das temperatursensitive Element (101, 201, 301) einen Behälter umfasst, in dem eine Polymermischung gemäß zumindest einem der Ansprüche 1 bis 8 angeordnet ist.

10. Verwendung nach Anspruch 9, wobei ein den Behälter passierendes optisches Signal temperaturabhängig gedämpft wird.

11. Verwendung nach einem der Ansprüche 9 oder 10, wobei der optische Detektor (105) so angepasst ist, dass eine Veränderung einer Lichtleistung eines von der Lichtquelle ausgehenden und den Behälter passierenden Lichts detektierbar ist, wobei die detektierte und sich verändernde Lichtleistung einer im Behälter erfolgenden optischen Dämpfung entspricht.

12. Verwendung nach einem der Ansprüche 9-11, wobei das faseroptische Messsystem weiter umfasst:

   - ein erstes faseroptisches Kopplungselement (204, 304),

   wobei das erste faseroptische Kopplungselement (204, 304) durch mindestens eine optische Faser (202, 302) mit der Lichtquelle (203, 303) verbunden ist, und mindestens eine weitere optische Faser (205, 305) das erste faseroptische Kopplungselement mit dem thermosensitiven Element (201, 301) verbindet.

13. Verwendung nach Anspruch 12, wobei mindestens eine optische Faser (206) das thermosensitive Element (201) mit dem Detektor (207) verbindet, mindestens eine optische Faser (208) das erste faseroptische Kopplungselement (204) mit einem weiteren Detektor (209) verbindet, die optischen Fasern (205, 206, 208) parallel zueinander verlaufen und mechanisch sowie thermisch miteinander gekoppelt sind, wobei das faseroptische Messsystem ein zweites faseroptisches Kopplungselement (307) umfasst, und das zweite faseroptische Kopplungselement mit dem thermosensitiven Element (301) und mit dem Detektor jeweils über mindestens eine optische Faser (306, 310) verbunden ist, das erste und das zweite faseroptische Kopplungselement (307) unabhängig voneinander ausgewählt ist unter: einem faseroptischen Koppler, einem faseroptischen Multiplexer und/oder einem faseroptischen Schalter; wobei das erste und das zweite faseroptische Kopplungselement (304, 307) über eine optische Faser (310) miteinander verbunden sind, und die optischen Fasern (305, 306, 310) parallel zueinander verlaufen und mechanisch sowie thermisch miteinander gekoppelt sind.

14. Verwendung nach einem der Ansprüche 9-13 zur Erfassung eines Temperaturverlaufs und/oder einer Temperatur der Hautoberfläche eines warmblütigen Organismus oder zur industriellen Prozesskontrolle.

15. Verwendung nach Anspruch 14, wobei die industrielle Prozesskontrolle in der chemischen Industrie, in der pharmazeutischen Industrie, in der Papier- und Textilindustrie, in der Biotechnologie oder in der Lebensmitteltechnologie erfolgt.

16. Temperaturmessverfahren, umfassend:

    - Bereitstellen eines Behälters, umfassend eine Polymermischung gemäß zumindest einem der Ansprüche 1 bis 8;
    - Bereitstellen einer Lichtquelle (104, 203, 303), eines optischen Detektors (105, 207, 209, 309) und von optischen Fasern (102, 103, 202, 205, 206, 208, 302, 305, 306, 308, 310);
    - Einkoppeln von Licht einer Lichtquelle in den Behälter und den Detektor mit Hilfe der optischen Fasern, wobei von der Lichtquelle zum Detektor gelangendes Licht auf seinem Weg zum Detektor den Behälter zumindest teilweise passiert;
    - Messen der optischen Leistung des Lichts, das die im Behälter befindliche Polymermischung durchstrahlt hat;
    - Zuordnen der am Detektor erfassten Lichtleistung zu einer Temperatur im Behälter und Feststellen eines Temperaturwertes am Behälter;
    - optionales Übertragen des festgestellten Temperaturwertes an eine Kontroll- und Überwachungseinheit.

17. Temperaturmessverfahren nach Anspruch 16, wobei von der Lichtquelle ausgehendes Licht ohne den Behälter zu passieren zum Detektor geführt wird und als ein Referenzsignal zu einer Kompensation einer parasitären Dämpfung durch die optische Faser dient.

18. Faseroptisches Messsystem (100, 200, 300) zur Messung einer Temperatur, umfassend:

    - ein temperatursensitives Element (101, 201, 301);
    - mindestens eine lichtleitende optische Faser (102, 103, 202, 205, 206, 208, 302, 305, 306, 308, 310);
    - eine Lichtquelle (104, 203, 303); und
    - mindestens einen optischen Detektor (105, 207, 209, 309),

    wobei das temperatursensitive Element eine Polymermischung gemäß zumindest einem der Ansprüche 1 bis 8 umfasst.

## Stand der Technik

**a**

eine Phase (Lösung)

$T_g$

Temperatur, $T$

$T_{dem}, M = \infty$

$T_\Theta$

**UCST** $T_{dem}$

zwei flüssige Phasen

$T_{BP}$

flüssige und
feste (präzipitierte)
Phasen

**Glas**

**Polymer-Konzentration, c**

**b**

flüssige und feste (präzipitierte)
Phasen

$T_g$

Temperatur, $T$

$T_{dem}, M = \infty$

$T_\Theta$

zwei flüssige Phasen

$T_{BP}$

**LCST** $T_{dem}$

eine Phase (Lösung)

**0°C**

Festes Wasser

**Glas**

**Polymer-Konzentration, c**

## FIG. 1

<u>100</u>

FIG. 2

200

FIG. 3

300

FIG. 4

FIG. 5

FIG. 6

HDO

ppm (t1)

FIG. 7

FIG. 8

Europäisches
Patentamt

European
Patent Office

Office européen
des brevets

# EUROPÄISCHER RECHERCHENBERICHT

Nummer der Anmeldung

EP 20 16 3303

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y,D | US 7 307 141 B2 (KOOI CHEE C [MY]) 11. Dezember 2007 (2007-12-11) * Abbildungen 1,3A * ----- | 1-18 | INV. G01K13/00 G01K11/32 C08L33/14 |
| A | US 5 052 820 A (MCGINNISS VINCENT D [US] ET AL) 1. Oktober 1991 (1991-10-01) * Abbildungen 1A,1B,7A,7B,7C * ----- | 1-18 | C08L33/24 C08L33/26 |
| Y,D | JEAN-FRANÇOIS LUTZ ET AL: "Point by Point Comparison of Two Thermosensitive Polymers Exhibiting a Similar LCST: Is the Age of Poly(NIPAM) Over?", JOURNAL OF THE AMERICAN CHEMICAL SOCIETY, Bd. 128, Nr. 40, 16. September 2006 (2006-09-16), Seiten 13046-13047, XP055104521, ISSN: 0002-7863, DOI: 10.1021/ja065324n * Abbildung 1A * ----- | 1-18 | |
| Y | JEAN-FRANÇOIS LUTZ ET AL: "Preparation of Ideal PEG Analogues with a Tunable Thermosensitivity by Controlled Radical Copolymerization of 2-(2-Methoxyethoxy)ethyl Methacrylate and Oligo(ethylene glycol) Methacrylate", MACROMOLECULES, Bd. 39, Nr. 2, 21. Dezember 2005 (2005-12-21), Seiten 893-896, XP055125472, ISSN: 0024-9297, DOI: 10.1021/ma0517042 * Abbildungen 1A-1B * ----- -/-- | 1-18 | RECHERCHIERTE SACHGEBIETE (IPC) G01K C08L |

Der vorliegende Recherchenbericht wurde für alle Patentansprüche erstellt

| Recherchenort | Abschlußdatum der Recherche | Prüfer |
|---|---|---|
| Den Haag | 15. Mai 2020 | Rosello Garcia, M |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes
     Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 20 16 3303

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Vladimir Aseyev ET AL: "Non-ionic Thermoresponsive Polymers in Water" In: "Bioactive Surfaces", 20. April 2010 (2010-04-20), Springer Berlin Heidelberg, Berlin, Heidelberg, XP055202649, ISSN: 0065-3195 ISBN: 978-3-64-220155-4 Bd. 242, Seiten 29-89, DOI: 10.1007/12_2010_57, * Structures 1-11.; Seite 52 - Seite 55; Tabelle 2 * * Structure 56.; Seite 65; Tabelle 3 * ----- | 1-18 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 15. Mai 2020 | Rosello Garcia, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 16 3303

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-05-2020

| Im Recherchenbericht angeführtes Patentdokument | Datum der Veröffentlichung | Mitglied(er) der Patentfamilie | Datum der Veröffentlichung |
|---|---|---|---|
| US 7307141 B2 | 11-12-2007 | US 2006036069 A1<br>US 2007029198 A1 | 16-02-2006<br>08-02-2007 |
| US 5052820 A | 01-10-1991 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7307141 B2

**In der Beschreibung aufgeführte Nicht-Patentliteratur**

- **A. D. MCNAUGHT ; A. WILKINSON.** Compendium of Chemical Terminology. Blackwell Scientific Publications, 1997
- **M. NIC ; J. JIRAT ; B. KOSATA.** XML on-line corrected version. 2006
- Non-ionic thermoresponsive Polymers in water. **ASEYEV, V. ; TENHU, H. ; WINNIK F.M.** Self organized nanostructures of amphiphilic block copolymers II. Springer-Verlag, 2011, vol. 242, 29-89
- **ARNAUTS, J. ; BERGHMANS, H.** Amorphous thermoreversible gels of atactic polystyrene. *Polymer Communications,* 1987, vol. 28 (3), 66-68
- **VON PETER W. ATKINS ; JULIO DE PAULA.** Kurzlehrbuch Physikalische Chemie. Wiley-VCH Verlag GmbH & Co. KGaA, 2008
- **CHYTRY, V. ; ULBRICH, K.** Conjugate of Doxorubicin with a Thermosensitive Polymer Drug Carrier. *Journal of Bioactive and Biocompatible Polymers,* 2001, vol. 16 (6), 427-440
- **FUNDUEANU, G. et al.** Lower critical solution temperature versus volume phase transition temperature in thermoresponsive drug delivery systems. *eXPRESS Polymer Letters,* 2011, vol. 5 (10), 839-848
- **LUTZ et al.** *J. Am. Chem. Soc.,* 2006, vol. 128, 13046-13047